# EUROPÄISCHE PATENTSCHRIFT

(11) **EP 2 705 563 B1**
(45) Veröffentlichungstag und Bekanntmachung des Hinweises auf die Patenterteilung: **17.08.2016**
(21) Anmeldenummer: 12721204.1
(22) Anmeldetag: 26.04.2012
(51) Int. Cl.: H01M 8/24, H01M 8/10

(54) **BAUSATZ FÜR EINE MODULAR AUFGEBAUTE BRENNSTOFFZELLENVORRICHTUNG MIT BAUGLEICHEN MODULGEHÄUSEN FÜR UNTERSCHIEDLICHE SYSTEMKOMPONENTEN**
KIT FOR A MODULAR FUEL CELL ASSEMBLY WITH IDENTICAL MODUL HOUSINGS FOR DIFFERENT SYSTEM COMPONENTS
KIT POUR UN ASSEMBLAGE MODULAIRE DE PILES À COMBUSTIBLE AVEC DES BOÎTIERS DE MODULE DE CONSTRUCTION IDENTIQUE POUR COMPOSANTS DE SYSTÈME DIFFÉRENTS

(30) Priorität: 02.05.2011 DE 102011050033
(43) Veröffentlichungstag der Anmeldung: 12.03.2014
(73) Patentinhaber: Deutsches Zentrum für Luft- und Raumfahrt e.V., 51147 Köln (DE)
(72) Erfinder: BRINNER, Andreas, 71277 Rutesheim (DE)
(74) Vertreter: Hoeger, Stellrecht & Partner Patentanwälte mbB
(86) Internationale Anmeldenummer: PCT/EP2012/057649
(87) Internationale Veröffentlichungsnummer: WO 2012/150174

(56) Entgegenhaltungen:
- EP-A1- 1 429 407
- DE-A1-102008 020 903
- DE-B3-102007 051 361
- US-A1- 2003 215 680
- US-A1- 2008 131 747

## Beschreibung

Die vorliegende Erfindung betrifft einen Bausatz für eine modulare Brennstoffzellenvorrichtung, welche mehrere separate Module umfasst, wobei mindestens ein Modul als ein Oxidator-Versorgungsmodul und mindestens ein Modul als ein Brennstoffzellenmodul ausgebildet ist.

Ein modularer Aufbau einer Brennstoffzellenvorrichtung ist beispielsweise aus der WO 2006/032359 A2 bekannt.

Die DE 11 2005 002 971 T5 offenbart ein Brennstoffzellensystem, bei welchem verschiedene Module des Brennstoffzellensystems in einem gemeinsamen Gehäuse angeordnet sind.

Die DE 20 2004 011 801 U1 offenbart ein Kraftwerk zur Erzeugung elektrischen Stroms, bei welchem mehrere Hybridbrennstoffzellenmodule vorgesehen sind.

Der vorliegenden Erfindung liegt die Aufgabe zugrunde, einen Bausatz der eingangs genannten Art bereitzustellen, welcher eine geringe Anzahl unterschiedlicher Bauteile aufweist und die Herstellung einer flexibel einsetzbaren Brennstoffzellenvorrichtung ermöglicht.

Diese Aufgabe wird erfindungsgemäß durch die Merkmale aus Anspruch 1 gelöst, wobei der Bausatz mehrere Modulgehäuse umfasst, welche baugleich sind und welche universell für die unterschiedlichen Module der Brennstoffzellenvorrichtung verwendbar sind.

Dadurch, dass der Bausatz mehrere baugleiche und universell verwendbare Modulgehäuse umfasst, kann für mehrere unterschiedliche, insbesondere funktional unterschiedliche, Module der Brennstoffzellenvorrichtung ein Modulgehäuse desselben Typs verwendet werden. Für die unterschiedlichen Module der Brennstoffzellenvorrichtung müssen somit keine unterschiedlich ausgebildeten Modulgehäuse geplant und hergestellt werden.

Bei einer Ausgestaltung der Erfindung ist vorgesehen, dass die Modulgehäuse dieselben äußeren Abmessungen aufweisen.

Insbesondere dann, wenn die Modulgehäuse im Wesentlichen quaderförmig ausgebildet sind, kann vorteilhafterweise vorgesehen sein, dass die Modulgehäuse dieselbe Länge, dieselbe Breite und dieselbe Höhe aufweisen.

Günstig ist es, wenn die Modulgehäuse miteinander identische Aufnahmeabschnitte zum Aufnehmen der Module der Brennstoffzellenvorrichtung umfassen.

Die Modulgehäuse umfassen zumindest vor der Montage der Brennstoffzellenvorrichtung miteinander identische Anschlussabschnitte zum Anschließen von Verbindungsvorrichtungen für die Module der Brennstoffzellenvorrichtung.

Bei einer Ausgestaltung der Erfindung weist der Anschlussabschnitt eines jeden Modulgehäuses zumindest vor der Montage der Brennstoffzellenvorrichtung mindestens eine vorbereitete Anschlussöffnung auf.

Unter einer vorbereiteten Anschlussöffnung ist ein Bereich verringerter Materialstärke des Modulgehäuses zu verstehen, welcher die Form einer im montierten Zustand der Brennstoffzellenvorrichtung zum Anschließen einer Verbindungsvorrichtung des Moduls nötigen Durchgangsöffnung aufweist.

Vorteilhaft ist es, wenn der Anschlussabschnitt eines jeden Modulgehäuses eine Vielzahl von vorbereiteten Anschlussöffnungen aufweist. Insbesondere kann vorgesehen sein, dass für jede der Verbindungsvorrichtungen sämtlicher Module der Brennstoffzellenvorrichtung separate vorbereitete Anschlussöffnungen vorgesehen sind. Auf diese Weise muss bei der Montage der Brennstoffzellenvorrichtung jedes der Modulgehäuse lediglich dadurch zur Aufnahme eines bestimmten Moduls der Brennstoffzellenvorrichtung angepasst werden, dass die für dieses bestimmte Modul nötigen Durchgangsöffnungen mittels der vorbereiteten Anschlussöffnungen durch Heraustrennen eines Bereichs verringerter Materialstärke des Modulgehäuses gebildet werden

Ferner kann vorgesehen sein, dass solche Anschlussöffnungen, welche für jedes der Module der Brennstoffzellenvorrichtung notwendig sind, bereits als fertige Anschlussöffnungen in den Modulgehäusen ausgebildet sind, das heißt, dass diese Anschlussöffnungen bereits Durchgangsöffnungen in den Modulgehäusen darstellen.

Bei einer Ausgestaltung der Erfindung ist vorgesehen, dass der Anschlussabschnitt eines jeden Modulgehäuses eine Mehrzahl von vorbereiteten Anschlussöffnungen aufweist, wobei für unterschiedliche Verbindungsvorrichtungen für die Module der Brennstoffzellenvorrichtung unterschiedliche vorbereitete Anschlussöffnungen vorgesehen sind. Auf diese Weise ist für eine bestimmte Verbindungsvorrichtung jeweils eine bestimmte Anschlussöffnung vorgesehen, so dass eine einheitliche Ausgestaltung der Anschlussabschnitte der Modulgehäuse und eine einfache Anordnung der Verbindungsvorrichtungen für die Module möglich ist. Ferner ist hierdurch einem unbeabsichtigten Vertauschen der unterschiedlichen Anschlussöffnungen wirksam vorgebeugt.

Bei einer Ausgestaltung der Erfindung ist vorgesehen, dass der Anschlussabschnitt eines jeden Modulgehäuses an einer im montierten Zustand der Brennstoffzellenvorrichtung oberen Oberseite des Modulgehäuses angeordnet ist. Auf diese Weise kann verhindert werden, dass von den Seitenwänden der Modulgehäuse Verbindungsvorrichtungen abstehen, welche einem kompakten Anordnen der Modulgehäuse aneinander im Wege stehen würden.

Günstig kann es sein, wenn der Anschlussabschnitt eines jeden Modulgehäuses eine Abdeckung für einen Aufnahmeabschnitt des jeweiligen Modulgehäuses bildet. Insbesondere kann hierbei vorgesehen sein, dass der Anschlussabschnitt als ein Deckel für einen beispielsweise kastenförmigen Aufnahmeabschnitt ausgebildet ist.

Vorteilhaft kann es sein, wenn die Modulgehäuse eine Modulkühlvorrichtung oder eine vorbereitete Modulkühlvorrichtung umfassen. Auf diese Weise kann insbesondere die im Betrieb der Brennstoffzellenvorrichtung entstehende Wärme gezielt aus den Modulgehäusen nach außen abgeführt werden.

Die Modulkühlvorrichtung oder die vorbereitete Modulkühlvorrichtung ist vorzugsweise an einer im montierten Zustand der Brennstoffzellenvorrichtung oberen Oberseite des Modulgehäuses angeordnet. Auf diese Weise kann auch bei einer Aneinanderreihung mehrerer Modulgehäuse eine wirksame Wärmeableitung mittels der Modulkühlvorrichtung im montierten Zustand der Brennstoffzellenvorrichtung erfolgen.

Bei einer Ausgestaltung der Erfindung ist vorgesehen, dass jedes der Modulgehäuse mindestens zwei parallel zueinander verlaufende Wandungen umfasst. Insbesondere kann vorgesehen sein, dass jedes der Modulgehäuse im Wesentlichen quaderförmig ausgebildet ist.

Die Modulgehäuse sind insbesondere dann einfach nebeneinander anordenbar, wenn die mindestens zwei parallel zueinander verlaufenden Wandungen im montierten Zustand der Brennstoffzellenvorrichtung im Wesentlichen vertikale Seitenwände des Modulgehäuses bilden.

Der erfindungsgemäße Bausatz eignet sich insbesondere zur Verwendung in einer erfindungsgemäßen Brennstoffzellenvorrichtung, umfassend mehrere Module, wobei mindestens ein Modul als ein Oxidator-Versorgungsmodul und mindestens ein Modul als ein Brennstoffzellenmodul ausgebildet ist und wobei die Brennstoffzellenvorrichtung aus einem erfindungsgemäßen Bausatz herstellbar ist.

Die erfindungsgemäße Brennstoffzellenvorrichtung weist vorzugsweise die vorstehend im Zusammenhang mit dem erfindungsgemäßen Bausatz beschriebenen Merkmale und/oder Vorteile auf.

Bei einer Weiterbildung der Brennstoffzellenvorrichtung ist vorgesehen, dass die Brennstoffzellenvorrichtung mindestens ein als Brennstoff-Versorgungsmodul, (in einer flüssigkeitsgekühlten Ausgestaltung) mindestens ein als Kühlmodul, mindestens ein als Steuermodul zur Steuerung der Brennstoffzellenvorrichtung und/oder mindestens ein als Kopplungsmodul zur Kopplung der Brennstoffzellenvorrichtung mit einer Batterievorrichtung ausgebildetes Modul umfasst, welche jeweils in einem Modulgehäuse angeordnet sind.

Die Modulgehäuse des erfindungsgemäßen Bausatzes eignen sich vorzugsweise zur wahlweisen Aufnahme von mindestens zwei funktional unterschiedlichen Modulen der Brennstoffzellenvorrichtung.

Die erfindungsgemäße Brennstoffzellenvorrichtung eignet sich insbesondere zur Verwendung in einem Fahrzeug, umfassend mehrere Batterievorrichtungen und mindestens eine erfindungsgemäße Brennstoffzellenvorrichtung.

Das erfindungsgemäße Fahrzeug weist vorzugsweise die vorstehend im Zusammenhang mit dem erfindungsgemäßen Bausatz und/oder der erfindungsgemäßen Brennstoffzellenvorrichtung beschriebenen Merkmale und/oder Vorteile auf.

Bei einer Weiterbildung des erfindungsgemäßen Fahrzeugs ist vorgesehen, dass die Modulgehäuse für die Module der Brennstoffzellenvorrichtung und Gehäuse für die Batterievorrichtungen im Wesentlichen dieselben Abmessungen aufweisen.

Insbesondere kann hierbei vorgesehen sein, dass für die Batterievorrichtungen und für die Module der Brennstoffzellenvorrichtung dieselben Modulgehäuse verwendet werden.

Als Brennstoff für die Brennstoffzellenvorrichtung kann insbesondere Wasserstoff verwendet werden.

Als Oxidator dient vorzugsweise Luft, insbesondere Sauerstoff aus der Luft.

Das erfindungsgemäße Fahrzeug ist insbesondere ein Landfahrzeug, beispielsweise ein Kraftfahrzeug. Ferner kann jedoch auch vorgesehen sein, dass das Fahrzeug ein Wasser-, Luft- oder Raumfahrzeug ist.

Vorzugsweise ermöglicht der erfindungsgemäße Bausatz für eine modulare Brennstoffzellenvorrichtung aufgrund der baugleichen und universell verwendbaren Modulgehäuse insbesondere einen Einsatz in batteriebetriebenen Fahrzeugen, wobei vorzugsweise bereits vorhandene Batterieelemente lediglich durch die ähnlich oder sogar gleich dimensionierten Modulgehäuse der Brennstoffzellenvorrichtung ersetzt werden. Hierdurch kann auf besonders einfache Weise ein Hybrid-Energieversorgungssystem für ein Fahrzeug, umfassend ein Brennstoffzellensystem und ein Batteriesystem, gebildet werden.

Ferner können der erfindungsgemäße Bausatz, die erfindungsgemäße Brennstoffzellenvorrichtung und/oder das erfindungsgemäße Fahrzeug die nachfolgend beschriebenen Merkmale und/oder Vorteile aufweisen:
Durch die Kombination von vorgefertigten, voreingestellten Subsystemen in universell verwendbaren Gehäusen, welche vorzugsweise in ihren Abmessungen und ihrer Befestigungsart Standardgehäusen für Fahrzeugakkumulatoren gleichen oder identisch mit denselben sind, kann ein besonders einfacher Austausch der mittels des erfindungsgemäßen Bausatzes hergestellten Brennstoffzellenvorrichtung als Ersatz für Batterien eines batteriebetriebenen Fahrzeugs erfolgen.

Vorteilhafterweise können Befestigungen für in einem batteriebetriebenen Fahrzeug vorhandene Akkumulatoren für die Modulgehäuse verwendet werden.

Alternativ oder ergänzend hierzu kann eine sichere Befestigung der Modulgehäuse entweder über Befestigungselemente oder über vibrationsdämpfendes Einschäumen oder die Einlage von Dämpfungsplatten erfolgen.

Ein möglicherweise notwendiger Kühlradiator und/oder ein Gasspeicher können nach den Gesichtspunkten der Unfallsicherheit getrennt von dem eigentlichen Brennstoffzellensystem verbaut werden. Beispielsweise kann ein Kühler in Radläufen des Fahrzeugs eingebaut werden, während ein Gasspeicher, insbesondere ein Metallhydrid-Wasserstoffspeicher, in Seitenschwellern des Fahrzeugs, als Quereinbau über den Fahrzeugachsen oder als Fahrzeugchassis-Konstruktionselement im Fahrzeug verbaut wird.

Günstig kann es sein, wenn ein Thermomanagement der Brennstoffzellenmodule und/oder der Batterievorrichtungen und/oder des Metallhydrid-Wasserstoffspeichers als gemeinsames Thermomanagementsystem in das Fahrzeug integriert ist.

Vorzugsweise umfasst die Brennstoffzellenvorrichtung eine Brennstoffzelleneinrichtung mit einem oder mehreren Brennstoffzellenblöcken, in denen chemische Energie in elektrische Energie umwandelbar ist, eine Oxidator-Versorgungseinrichtung für die Brennstoffzelleneinrichtung, eine Brennstoff-Versorgungseinrichtung für die Brennstoffzelleneinrichtung, und eine Steuerungseinrichtung.

Brennstoffzellenvorrichtungen, umfassend eine Brennstoffzelleneinrichtung mit einem oder mehreren Brennstoffzellenblöcken, in denen chemische Energie in elektrische Energie umwandelbar ist, eine Oxidator-Versorgungseinrichtung für die Brennstoffzelleneinrichtung, eine Brennstoff-Versorgungseinrichtung für die Brennstoffzelleneinrichtung, und eine Steuerungseinrichtung, sind beispielsweise aus der DE 101 27 600 A1 bzw. C2 oder der DE 101 27 599 A1 bekannt. Vorteilhaft kann es sein, wenn die Brennstoffzelleneinrichtung und/oder die Oxidator-Versorgungseinrichtung und/oder die Brennstoff-Versorgungseinrichtung als Modul ausgebildet ist/sind, wobei in einem Modul die funktionellen Komponenten der jeweiligen Einrichtung angeordnet sind, das entsprechende Modul eine Einheit bildet, welche als Ganzes positionierbar ist, und/oder das entsprechende Modul eine Kommunikationsschnittstelle mit Anschlüssen aufweist.

Für jedes Modul ist vorzugsweise eine definierte Schnittstelle zur Kommunikation mit der Außenwelt bzw. anderen Modulen bezüglich Stoffaustausch (über Stoffströme) und/oder Energieaustausch und/oder Signalaustausch bereitgestellt. Dies ermöglicht es, die Brennstoffzellenvorrichtung aus Subsystemen zusammenzustellen, wobei die Subsysteme, insbesondere bezüglich der jeweiligen Betriebsparameter, getrennt einstellbar sind. Insbesondere lassen sich für jedes Modul die Betriebsparameter bezüglich Stoffströmen, elektrischen Strömen und Signalströmen getrennt einstellen und auch optimieren. Es ergibt sich eine einfache Zerlegbarkeit und Zusammensetzbarkeit der Brennstoffzellenvorrichtung.

Weiterhin lassen sich sicherheitsrelevante Komponenten getrennt ausbilden. Für die Brennstoffführung sind dann nur noch das Brennstoff-Versorgungsmodul und das Brennstoffzellenmodul relevant. Die anderen Module sind dann nicht mehr sicherheitsrelevant.

Mit der Brennstoffzellenvorrichtung lassen sich vorzugsweise die in der DE 101 27 599 A1, der DE 101 27 600 A1 und DE 101 27 600 C2 beschriebenen Verfahren durchführen. Ferner lässt sich die Brennstoffzellenvorrichtung wie in diesen Druckschriften beschrieben ausbilden.

Günstig ist es insbesondere, wenn ein entsprechendes Modul ein Modulgehäuse aufweist, in welchem die funktionellen Komponenten angeordnet sind. Über das Modulgehäuse lässt sich das Modul als Einheit ausbilden. Ferner lässt sich an dem Modulgehäuse eine definierte Schnittstelle und insbesondere eine definierte Kommunikationsschnittstelle anordnen. In dem Modulgehäuse sind die funktionellen Komponenten geschützt.

Beispielsweise ist das Modulgehäuse zumindest teilweise aus einem durchsichtigen Material hergestellt, so dass Messgeräte wie Druckanzeigen abgelesen werden können.

Insbesondere sind an dem Modulgehäuse der oder die Anschlüsse angeordnet, über die Module untereinander oder mit entsprechenden Einrichtungen kommunizieren können.

Es kann vorgesehen sein, dass das Modulgehäuse geschlossen ist. Dadurch werden die funktionellen Komponenten, welche in dem Modulgehäuse angeordnet sind, geschützt.

Besonders günstig ist es, wenn das Modulgehäuse gasdicht ist, insbesondere im Falle des Brennstoffzellenmoduls und des Brennstoff-Versorgungsmoduls. Dadurch lässt sich das Entweichen von Brennstoff an undefinierten Stellen vermeiden. Das System lässt sich mit einer Sicherheitsbelüftung direkt an die Umgebung versehen.

Die Anschlüsse umfassen insbesondere Stoffanschlüsse, Signalanschlüsse und elektrische Leistungsanschlüsse. Über die Stoffanschlüsse kann ein Stoffaustausch erfolgen. Beispielsweise wird über einen Auskopplungsanschluss des Brennstoff-Versorgungsmoduls Brennstoff ausgekoppelt und über einen Brennstoffeinkopplungsanschluss der Brennstoffzelleneinrichtung lässt sich in diese Brennstoff einkoppeln. Über Signalanschlüsse können Steuersignale eingekoppelt werden oder es lassen sich Steuersignale auskoppeln. Über elektrische Leistungsanschlüsse kann elektrische Leistung eingekoppelt werden oder (im Falle der Brennstoffzelleneinrichtung) ausgekoppelt werden.

Insbesondere weist das Brennstoffzellenmodul Stoffanschlüsse für Oxidator und Brennstoff und einen Anschluss zur Auskopplung elektrischer Leistung auf.

Es kann auch vorgesehen sein, dass das Brennstoffzellenmodul mindestens einen Signalanschluss zur Einkopplung von Steuersignalen aufweist. Über solch einen Anschluss lassen sich beispielsweise Steuersignale einkoppeln, um ein Sperrventil getaktet zu öffnen und zu schließen, über das nicht verbrauchter Brennstoff und/oder Brennstoff mit erhöhtem Inertgasanteil und/oder Wasseranteil abführbar ist.

Es ist ferner vorgesehen, dass das Brennstoff-Versorgungsmodul mindestens einen Brennstoffanschluss zur Auskopplung von Brennstoff aufweist. Über diesen Brennstoffanschluss ist eine Verbindung zu der Brennstoffzelleneinrichtung herstellbar.

Es kann auch vorgesehen sein, dass das Brennstoff-Versorgungsmodul mindestens einen Signalanschluss aufweist.

Es ist ferner vorgesehen, dass das Oxidator-Versorgungsmodul mindestens einen Oxidatoranschluss zur Auskopplung von Oxidator aufweist. Es lässt sich dadurch Luft mit Luftsauerstoff als Oxidator auskoppeln. Über diesen Anschluss lässt sich die Verbindung mit einer Brennstoffzelleneinrichtung herstellen.

Es kann auch vorgesehen sein, dass das Oxidator-Versorgungsmodul mindestens einen Signalanschluss aufweist, über den insbesondere Steuerungssignale einkoppelbar sind.

Ganz besonders vorteilhaft ist es, wenn kommunizierende Module über Leitungen verbunden sind. Die Module lassen sich an einer Anwendung zunächst getrennt und unabhängig voneinander positionieren. Die notwendigen Kommunikationsverbindungen bezüglich Stofftransport, Zuführung von elektrischer Leistung und bezüglich Steuerungssignalen werden dann nachträglich entsprechend der geometrischen Gegebenheiten hergestellt. Es ergibt sich dadurch ein flexibler Aufbau, wobei die Brennstoffzellenvorrichtung über Subsysteme gebildet ist.

Insbesondere sind die Leitungen von dem oder den Modulen getrennte Elemente.

Es kann vorgesehen sein, dass ein oder mehrere Brennstoffspeicher in das Brennstoff-Versorgungsmodul integriert sind. Wenn ein Brennstoffspeicher entleert ist, dann wird beispielsweise das Brennstoff-Versorgungsmodul als Ganzes ausgetauscht.

Es kann auch vorgesehen sein, dass mindestens ein Brennstoffspeicher vorgesehen ist, welcher an die Brennstoff-Versorgungseinrichtung gekoppelt ist und insbesondere ein externes Element bezogen auf ein Brennstoff-Versorgungsmodul bildet.

Es können auch ein oder mehrere Brennstoffspeicher-Module vorgesehen sein. Ein Brennstoffspeicher-Modul lässt sich an ein Brennstoff-Versorgungsmodul ankoppeln. Wenn ein Brennstoffspeicher entleert ist, dann kann ein entsprechendes Brennstoffspeicher-Modul auf einfache Weise ausgetauscht werden.

Ganz besonders vorteilhaft ist es, wenn der mindestens eine Brennstoffspeicher oder das mindestens eine Brennstoffspeicher-Modul als strukturelles Element der Brennstoffzellenvorrichtung oder einer Anwendung ausgebildet ist. Dadurch lässt sich die Energieversorgungseinrichtung der Anwendung, welche mit Hilfe der Brennstoffzellenvorrichtung gebildet ist, Platz sparend ausbilden.

Insbesondere ist der mindestens eine Brennstoffspeicher oder das mindestens eine Brennstoffspeicher-Modul ein Metallhydridspeicher oder umfasst einen solchen. In einem Metallhydridspeicher ist Wasserstoff nicht als freies Gas gespeichert, sondern in gebundener Form. Beispielsweise über Erhitzung lässt sich Wasserstoff aus einem solchen Metallhydridspeicher austreiben. Es treten dabei nicht die Sicherheitsprobleme auf wie bei der Wasserstoffspeicherung in einem Drucktank. Ein Metallhydridspeicher ist ein massives Element, welches entsprechend als strukturelles Element und beispielsweise als tragendes Element für eine Anwendung genutzt werden kann.

Insbesondere ist der mindestens eine Brennstoffspeicher mittels eines oder mehreren Strangpressprofilen gebildet. Entsprechende Metallhydridspeicher sind beispielsweise unter der Bezeichnung MH Hydrogene Storage Tank von SUMITOMO PRECISION PRODUCTS CO., LTD., Japan, erhältlich.

Günstigerweise ist der Brennstoffzelleneinrichtung eine Kühlungseinrichtung zugeordnet. Dadurch lässt sich die Brennstoffzelleneinrichtung mit einem optimierten Wirkungsgrad betreiben.

Ganz besonders vorteilhaft ist es, wenn die Kühlungseinrichtung so angeordnet und ausgebildet ist, dass mindestens ein Brennstoffspeicher mit Abwärme beaufschlagbar ist. Die Abwärme kann dann dazu genutzt werden, beispielsweise aus einem Metallhydridspeicher Wasserstoff auszutreiben. Dadurch lässt sich der Wirkungsgrad der Brennstoffzellenvorrichtung verbessern.

Es ist grundsätzlich möglich, dass die Kühlungseinrichtung mit der Brennstoffzelleneinrichtung in einem Brennstoffzellenmodul integriert ist. Es ist auch möglich, dass die Kühlungseinrichtung als separates Modul ausgebildet ist.

Insbesondere weist dann das Kühlmodul mindestens einen Abwärmeanschluss auf. An diesem Anschluss lässt sich Abwärme auskoppeln, um diese beispielsweise einem Metallhydridspeicher zuzuführen.

Günstig ist es, wenn das Kühlmodul mindestens einen Signalanschluss aufweist. Beispielsweise kann dann die entsprechende Kühlungseinrichtung über Steuerungssignale so gesteuert werden, dass sich eine optimale Kühlungswirkung ergibt.

Es kann auch vorgesehen sein, dass die Steuerungseinrichtung als Modul ausgebildet ist. Die Steuerungseinrichtung bildet dann eine eigene Komponente der Brennstoffzellenvorrichtung. Insbesondere ist eine zentrale Steuerungseinrichtung realisiert.

Günstigerweise ist mittels der Steuerungseinrichtung eine Ablaufsteuerung gebildet, welche voreingestellte Steuerungssignale sendet. Es erfolgt keine Regelung der Brennstoffzuführung und Oxidatorzuführung zu der Brennstoffzelleneinrichtung, sondern höchstens eine Steuerung. Ein entsprechendes Verfahren ist in der DE 101 27 600 A1 beschrieben.

Günstig ist es, wenn elektrische Verbraucher der Brennstoffzellenvorrichtung über die Steuerungseinrichtung mit elektrischer Energie versorgt sind. Die Steuerungseinrichtung stellt dann eine definierte Schnittstelle bereit, über die die entsprechenden Module die elektrische Energie in der erforderlichen Form erhalten können.

Günstig ist es, wenn die Betriebsparameter bezüglich der Stoffströme, der elektrischen Ströme und der Signalströme für jedes Modul unabhängig einstellbar sind und/oder eingestellt sind. Dadurch ergibt sich bei einfacher Herstellbarkeit eine optimierte Anpassbarkeit der Brennstoffzellenvorrichtung an Anwendungen. Jedes Modul lässt sich dabei getrennt optimieren.

Besonders vorteilhaft ist es, wenn in dem Brennstoff-Versorgungsmodul und/oder Oxidator-Versorgungsmodul und/oder Brennstoffzellenmodul Stoffführungen mittels einer Bohrung gebildet sind, wobei diese Bohrung insbesondere durch eine Ausnehmung in einem Vollmaterial hergestellt ist. Dadurch lässt sich innerhalb eines solchen Moduls eine Art von Stofftransport-Bus bereitstellen. Es muss dann keine Rohrführung vorgesehen sein. Insbesondere wenn Brennstoff geführt wird, ist dadurch die Gefahr von Lecks stark verringert. Ein Modul weist beispielsweise ein blockförmiges Kunststoffmodulgehäuse auf. In einem solchen blockförmigen Kunststoffmodulgehäuse lässt sich über eine Bohrung eine Stoffführung ausbilden.

Ganz besonders vorteilhaft ist es, wenn für die Oxidator-Versorgungseinrichtung der Druck und der Volumenstrom von auskoppelbarer Luft als Oxidatorträger fest vorgegeben sind. Dadurch lässt sich eine einfach arbeitende Brennstoffzellenvorrichtung ausbilden, wie sie in der DE 101 27 600 A1 bzw. DE 101 27 600 C2 beschrieben ist.

Aus dem gleichen Grund ist es vorteilhaft, wenn für die Brennstoff-Versorgungseinrichtung der Druck des auskoppelbaren Brennstoffs fest eingestellt ist.

Insbesondere ist für die Brennstoff-Versorgungseinrichtung die Druckdifferenz für auskoppelbaren Brennstoff in Relation zu von der Oxidator-Versorgungseinrichtung auskoppelbarer Luft als Oxidatorträger fest eingestellt. Eine entsprechende Verfahrensführung ist in der DE 101 27 600 A1 beschrieben.

Ganz besonders vorteilhaft ist es, wenn eine Mengenregelung des der Brennstoffzelleneinrichtung zugeführten Brennstoffs durch die elektrische Leistungsaufnahme eines Verbrauchers erfolgt. Dadurch ergibt sich eine einfache Steuerung und Regelung der Brennstoffzellenvorrichtung, da der Verbraucher die Brennstoffzuführung "automatisch" regelt.

Günstig ist es, wenn die Brennstoffzelleneinrichtung für eine Brennstoffzellenvorrichtung, mit einem oder mehreren Brennstoffzellenblöcken, in denen chemische Energie in elektrische Energie umwandelbar ist, auf einfache Weise handhabbar ist.

Vorteilhaft kann es sein, wenn die Brennstoffzelleneinrichtung als Modul ausgebildet ist, wobei in dem Modul die funktionellen Komponenten der Brennstoffzelleneinrichtung angeordnet sind, das Modul eine Einheit bildet, welches als Ganzes positionierbar ist, und das Modul eine Kommunikationsschnittstelle mit Anschlüssen aufweist.

Die Vorteile dieser Lösung wurden bereits oben im Zusammenhang mit der Brennstoffzellenvorrichtung beschrieben.

Weitere vorteilhafte Ausführungsformen wurden ebenfalls bereits im Zusammenhang mit der Brennstoffzellenvorrichtung erläutert.

Vorteilhaft kann es ferner sein, wenn die Oxidator-Versorgungseinrichtung als Modul ausgebildet ist, wobei in dem Modul die funktionellen Komponenten der Oxidator-Versorgungseinrichtung angeordnet sind, das Modul eine Einheit bildet, welche als Ganzes positionierbar ist, und das entsprechende Modul eine Kommunikationsschnittstelle mit Anschlüssen aufweist.

Die Vorteile dieser Lösung wurden bereits oben im Zusammenhang mit der Brennstoffzellenvorrichtung erläutert.

Weitere vorteilhafte Ausführungsformen wurden ebenfalls bereits im Zusammenhang mit der Brennstoffzellenvorrichtung erläutert.

Günstig kann es sein, wenn die Brennstoff-Versorgungseinrichtung als Modul ausgebildet ist, wobei an dem Modul die funktionellen Komponenten der Brennstoff-Versorgungseinrichtung angeordnet sind, das Modul eine Einheit bildet, welche als Ganzes positionierbar ist, und das Modul eine Kommunikationsschnittstelle mit Anschlüssen aufweist.

Die Vorteile dieser Lösung wurden bereits im Zusammenhang mit der Brennstoffzellenvorrichtung erläutert.

Weitere vorteilhafte Ausgestaltungen wurden ebenfalls bereits im Zusammenhang mit der Brennstoffzellenvorrichtung erläutert.

Die nachfolgende Beschreibung bevorzugter Ausführungsformen dient im Zusammenhang mit den Zeichnungen der näheren Erläuterung der Erfindung. Es zeigen:
- Figur 1: eine schematische Darstellung eines Ausführungsbeispiels einer Brennstoffzellenvorrichtung in Modulbauweise mit Luftkühlung;
- Figur 2: ein Ausführungsbeispiel eines Oxidator-Versorgungsmoduls;
- Figur 3: ein Ausführungsbeispiel eines Brennstoffzellenmoduls;
- Figur 4: ein Ausführungsbeispiel eines Brennstoff-Versorgungsmoduls;
- Figur 5: ein Ausführungsbeispiel eines Brennstoffspeicher-Moduls;
- Figur 6: eine der Figur 1 entsprechende schematische Darstellung eines Ausführungsbeispiels einer Brennstoffzellenvorrichtung in Modulbauweise mit Flüssigkeitskühlung;
- Figur 7: eine schematische Darstellung einer Draufsicht von oben auf ein Modulgehäuse der Brennstoffzellenvorrichtung;

- Figur 8: eine der Figur 7 entsprechende schematische Darstellung einer Draufsicht von oben auf ein Modulgehäuse der Brennstoffzellenvorrichtung, wobei das Modulgehäuse zur Aufnahme eines Steuermoduls vorbereitet ist;
- Figur 9: eine der Figur 7 entsprechende schematische Darstellung einer Draufsicht von oben auf ein Modulgehäuse der Brennstoffzellenvorrichtung, wobei das Modulgehäuse zur Aufnahme eines Brennstoff-Versorgungsmoduls vorbereitet ist;
- Figur 10: eine der Figur 7 entsprechende schematische Darstellung einer Draufsicht von oben auf ein Modulgehäuse der Brennstoffzellenvorrichtung, wobei das Modulgehäuse zur Aufnahme eines Oxidator-Versorgungsmoduls vorbereitet ist;
- Figur 11: eine der Figur 7 entsprechende schematische Darstellung einer Draufsicht von oben auf ein Modulgehäuse der Brennstoffzellenvorrichtung, wobei das Modulgehäuse zur Aufnahme eines Kühlmoduls vorbereitet ist;
- Figur 12: eine der Figur 7 entsprechende schematische Darstellung einer Draufsicht von oben auf ein Modulgehäuse der Brennstoffzellenvorrichtung, wobei das Modulgehäuse zur Aufnahme eines Brennstoffzellenmoduls vorbereitet ist;
- Figur 13: eine der Figur 7 entsprechende schematische Darstellung einer Draufsicht von oben auf ein Modulgehäuse der Brennstoffzellenvorrichtung, wobei das Modulgehäuse zur Aufnahme eines Kopplungsmoduls vorbereitet ist;
- Figur 14: eine der Figur 7 entsprechende schematische Darstellung einer Draufsicht von oben auf ein Modulgehäuse der Brennstoffzellenvorrichtung, wobei das Modulgehäuse zur Aufnahme eines Batteriemoduls vorbereitet ist;
- Figur 15: eine schematische Darstellung der Verbindungen zwischen den einzelnen Modulen der Brennstoffzellenvorrichtung in einem Blockschaltbild; und
- Figur 16: eine schematische perspektivische Darstellung eines Fahrzeugs mit einer Brennstoffzellenvorrichtung in Modulbauweise.

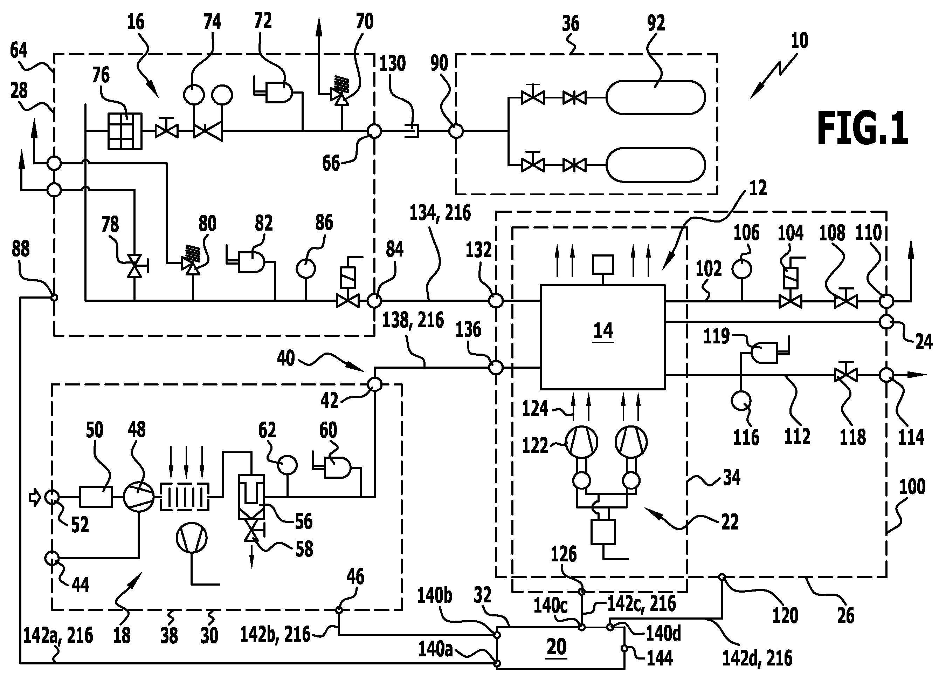

Ein Ausführungsbeispiel einer Brennstoffzellenvorrichtung, welches in Figur 1 gezeigt und dort mit 10 bezeichnet ist, umfasst eine Brennstoffzelleneinrichtung 12 mit einem oder mehreren Brennstoffzellenblöcken 14. Die Brennstoffzelleneinrichtung 12 ist die Brennstoffzellen-Kerneinrichtung der Brennstoffzellenvorrichtung 10. Ferner umfasst die Brennstoffzellenvorrichtung 10 eine Brennstoff-Versorgungseinrichtung 16, mittels welcher der oder die Brennstoffzellenblöcke 14 der Brennstoffzelleneinrichtung 12 mit Brennstoff versorgbar sind.

Weiterhin umfasst die Brennstoffzellenvorrichtung 10 eine Oxidator-Versorgungseinrichtung 18 für die Brennstoffzelleneinrichtung 12, mittels welcher für den oder die Brennstoffzellenblöcke 14 Oxidator bereitstellbar ist.

Zur Steuerung der Brennstoffzellenvorrichtung 10 ist eine Steuerungseinrichtung 20 vorgesehen.

Dem oder den Brennstoffzellenblöcken 14 kann eine Kühlungseinrichtung 22 zugeordnet sein.

Bei den Brennstoffzellen des oder der Brennstoffzellenblöcke 14 handelt es sich insbesondere um Polymermembran-Brennstoffzellen (PEFC), bei denen der Elektrolyt durch eine protonenleitende Membran gebildet ist. Neben der Funktion des Elektrolyten ist die Membran auch Katalysatorträger für die anodischen und kathodischen Elektrokatalysatoren und dient als Separator für die gasförmigen Reaktanten. Als Brennstoff wird Wasserstoff eingesetzt und als Oxidator Sauerstoff und insbesondere Luftsauerstoff. Der Brennstoffzelleneinrichtung 12 wird dann Luft mit Luftsauerstoff als Oxidator zugeführt.

In dem oder den Brennstoffzellenblöcken 14 wird chemische Energie durch die kalte Verbrennung des Brennstoffs mit dem Oxidator in elektrische Energie umgewandelt. Diese elektrische Energie ist über einen Anschluss 24 an einen Verbraucher abgebbar.

Die Brennstoffzellenvorrichtung 10 ist modular aufgebaut mit einem Brennstoffzellenmodul 26, einem Brennstoff-Versorgungsmodul 28 und einem Oxidator-Versorgungsmodul 30.

Ferner ist ein Steuermodul 32 vorgesehen, welches die Steuerungseinrichtung 20 umfasst.

Die Kühlungseinrichtung 22 ist in ein Kühlmodul 34 integriert.

Bei dem gezeigten Ausführungsbeispiel ist ein Brennstoffspeicher-Modul 36 vorgesehen.

Es ist alternativ auch möglich, dass Brennstoffspeicher in das Brennstoff-Versorgungsmodul 28 integriert sind.

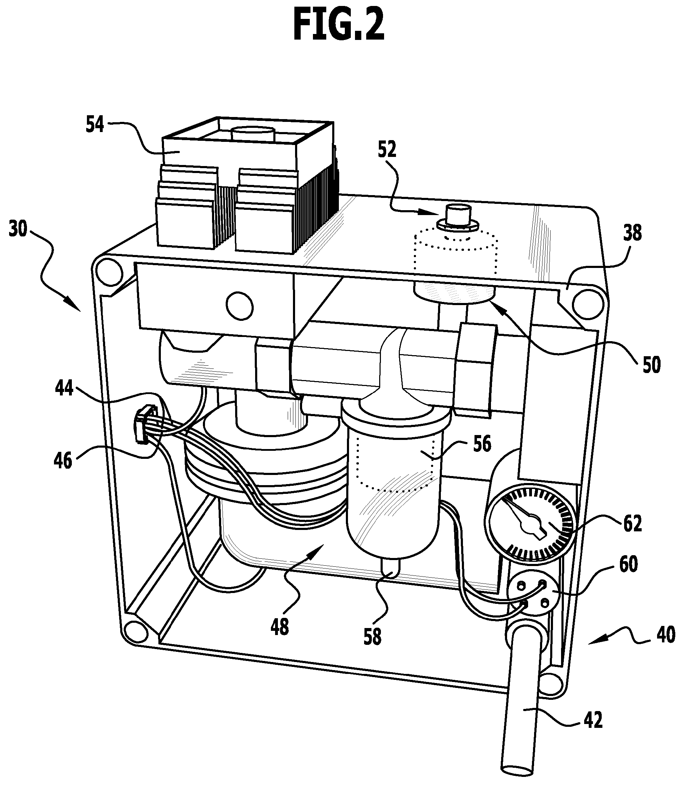

In das Oxidator-Versorgungsmodul 30 (Figuren 1 und 2) sind die funktionellen Komponenten der Oxidator-Versorgungseinrichtung 18 integriert. Das Oxidator-Versorgungsmodul 30 weist ein geschlossenes Modulgehäuse 38 auf. Das Modulgehäuse kann gasdicht ausgestaltet sein. Beispielsweise ist das Modulgehäuse durchsichtig. Ein mögliches Material ist Plexiglas.

Das Oxidator-Versorgungsmodul 30 ist mit einer Kommunikationsschnittstelle 40 versehen, welche einen Ausgangsanschluss 42 aufweist, über den Oxidator auskoppelbar ist. Insbesondere ist Luft als Oxidatorträger mit Luftsauerstoff als Oxidator auskoppelbar.

Ferner ist ein elektrischer Anschluss 44 vorgesehen, über den elektrische Energie in das Oxidator-Versorgungsmodul 30 zur Bereitstellung an elektrische Verbraucher dieses Moduls einkoppelbar ist.

Weiterhin kann ein Signalanschluss 46 zur Einkopplung von Steuerungssignalen vorgesehen sein.

Die entsprechenden Anschlüsse 42, 44 und 46 sind an dem Modulgehäuse 38 angeordnet.

In dem Modulgehäuse 38 ist ein Luftverdichter 48 angeordnet. Diesem ist ein Filter 50 vorgeschaltet. Das Modulgehäuse 38 weist eine oder mehrere Luftzuführungsöffnungen 52 auf, über die Luft dem Luftverdichter 48 zuführbar ist, wobei der Filter 50 durch die zugeführte Luft passiert werden muss. An der oder den Luftzuführungsöffnungen 52 ist ein Luftförderer und Kühler 54 angeordnet, welcher insbesondere über einen Elektromotor angetrieben ist.

In dem Modulgehäuse 38 ist dem Luftverdichter 48 ein Wasserabscheider 56 nachgeschaltet. Über diesen Wasserabscheider 56 lässt sich durch das Oxidator-Versorgungsmodul 30 durchgeführte Luft entfeuchten. Dem Wasserabscheider 56 ist dabei ein Stellelement 58 zugeordnet, welches in Verbindung mit einem Ausgang steht, über den Wasser abgelassen werden kann.

Ferner umfasst das Oxidator-Versorgungsmodul 30 einen Druckschalter 60 und eine Druckanzeige 62. Mittels des Druckschalters 60 lässt sich ein bestimmter Luftstrom des Luftverdichters 48 überprüfen. Dieser Luftstrom wird durch eine Stellvorrichtung (wie beispielsweise das Einstellventil 118) fest vorgegeben. Der Luftstrom lässt sich an dem Ausgangsanschluss 42 auskoppeln.

Für die Einstellung des Oxidator-Versorgungsmoduls 30 kann eine Stellvorrichtung auch direkt an das Oxidator-Versorgungsmodul 30 angeschlossen und/oder nur vorübergehend angeschlossen werden.

Das Oxidator-Versorgungsmodul 38 bildet eine als Ganzes positionierbare Einheit. Die Verbindung mit dem Steuermodul 32 erfolgt über die Kommunikationsschnittstelle 40. Die Verbindung mit dem Brennstoffzellenmodul 26 erfolgt über den Anschluss 42 (als Stoffstrom-Schnittstelle). Elektrische Verbraucher des Oxidator-Versorgungsmoduls 30 werden über das Steuermodul 32 mit elektrischer Energie (die an dem elektrischen Anschluss 44 eingekoppelt wird) versorgt.

Das Brennstoff-Versorgungsmodul 28 weist ein Modulgehäuse 64 auf, in welchem die funktionellen Komponenten der Brennstoff-Versorgungseinrichtung 16 angeordnet sind. Das Modulgehäuse 64 ist insbesondere geschlossen und gasdicht ausgebildet. Es ist vorzugsweise vorgesehen, dass Führungen für Brennstoff innerhalb des Brennstoff-Versorgungsmoduls 28 rohrfrei ausgebildet sind. Beispielsweise ist das Modulgehäuse 64 mittels eines Kunststoffblockes, beispielsweise eines Plexiglasblocks, gebildet und die entsprechenden Strömungsführungen sind durch Bohrungen in dem Kunststoffblock gebildet. Es wird dadurch eine Art von Bussystem für die Strömungsführung des Brennstoffs innerhalb des Brennstoff-Versorgungsmoduls 28 bereitgestellt.

Bei dem in Figur 1 gezeigten Ausführungsbeispiel sind Brennstoffspeicher außerhalb des Brennstoff-Versorgungsmoduls 28 angeordnet. Es ist dazu ein eigenes Brennstoffspeicher-Modul 36 vorgesehen. Um Brennstoff, welcher von dem Brennstoffspeicher-Modul 36 geliefert wird, einkoppeln zu können, ist an dem Modulgehäuse 64 ein Anschluss 66 zur Einkopplung von Brennstoff vorgesehen. Dieser Anschluss 66 steht in fluidwirksamer Verbindung mit einer Brennstoffführung 68 innerhalb des Modulgehäuses 64. An diese Brennstoffführung 68 ist ein Sicherheitsventil 70 gekoppelt. Weiterhin ist ein Druckschalter 72 vorgesehen, über den der Druck des innerhalb des Modulgehäuses 64 geführten Brennstoffs (insbesondere Wasserstoff) überprüfbar ist. Dem Druckschalter 72 ist eine Druckminderer-/Einstellvorrichtung 74 mit Druckanzeige nachgeschaltet. Weiterhin ist eine Flammensperre 76 vorgesehen.

Auf die Flammensperre 76 folgend ist ein Ablassventil 78 in der Brennstoffführung 68 angeordnet. Über das Ablassventil 78 lässt sich in dem Modulgehäuse 64 befindlicher gasförmiger Brennstoff auskoppeln.

Weiterhin ist ein weiteres Sicherheitsventil 80 vorgesehen.

Über einen weiteren Druckschalter 82 lässt sich der Druck von an einem Anschluss 84 auskoppelbaren Brennstoff überprüfen. Über eine Druckanzeige 86 ist dieser Druck anzeigbar.

Das Brennstoff-Versorgungsmodul 28 weist eine Kommunikationsschnittstelle auf, welche die Anschlüsse 66 und 84 umfasst. Weiterhin kann ein Steuersignalanschluss 88 vorgesehen sein. Für die Einkopplung von elektrischer Energie zur Bereitstellung an elektrische Verbraucher des Brennstoff-Versorgungsmoduls 28 kann ein elektrischer Anschluss vorgesehen sein (in Figur 1 nicht gezeigt).

Das Brennstoff-Versorgungsmodul 28 bildet eine Einheit, welche als Ganzes positionierbar ist.

Das Brennstoffspeicher-Modul 36 weist eine Schnittstelle 90 auf, über welche Brennstoff auskoppelbar ist und insbesondere dem Brennstoff-Versorgungsmodul 28 zuführbar ist. Das Brennstoffspeicher-Modul 36 weist einen oder mehrere Brennstoffspeicher 92 auf, in denen beispielsweise Wasserstoff gasförmig gespeichert ist.

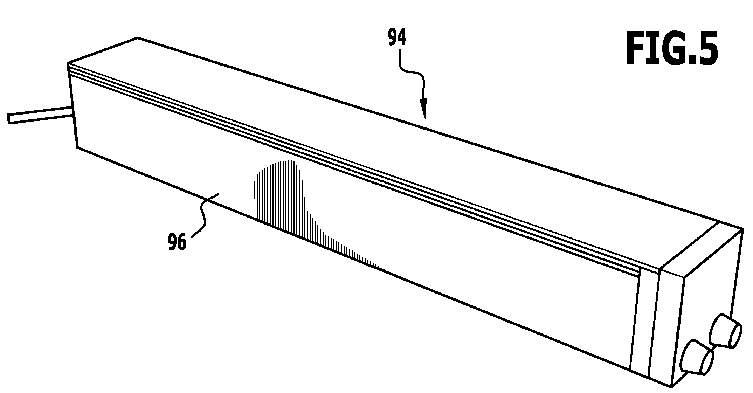

Es können auch ein oder mehrere Metallhydridspeicher 94 (Figur 5) vorgesehen sein. Ein solcher Metallhydridspeicher 94 ist insbesondere mittels eines Strangpressprofils 96 gebildet.

Ein solcher Metallhydridspeicher 94 kann ein strukturelles Element der Brennstoffzellenvorrichtung 10 oder einer Anwendung sein. Da der Metallhydridspeicher 94 mit seinem Strangpressprofil 96 mechanisch belastbar ist, kann er auch eine tragende Funktion beispielsweise in einem Fahrzeug übernehmen, um Fahrzeugteile abzustützen oder die Brennstoffzellenvorrichtung 10 mit ihren Modulen zu halten oder einzelne Module der Brennstoffzellenvorrichtung 10 zu halten.

Das Brennstoffspeicher-Modul 36 kann insbesondere so angeordnet und ausgebildet sein, dass es austauschbar ist. Nach der Entleerung kann es dann entnommen werden und es kann ein neues Brennstoffspeicher-Modul 36 eingesetzt werden mit gefülltem Brennstoffspeicher 92 bzw. gefüllten Brennstoffspeichern 92.

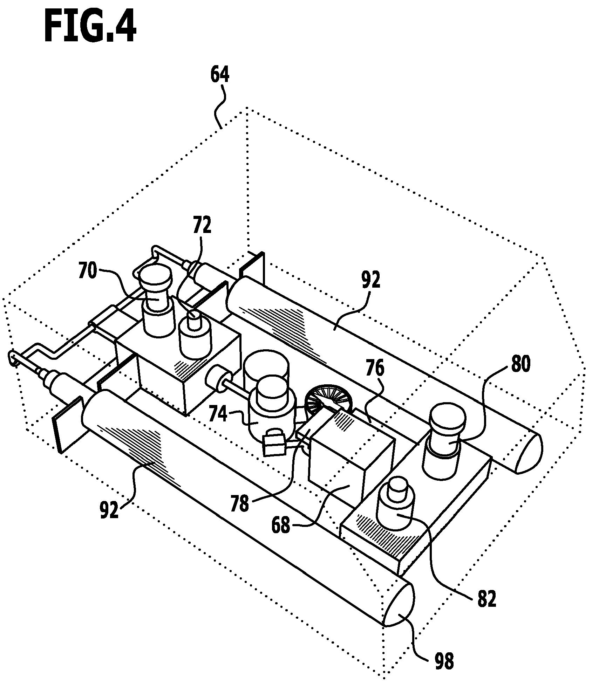

Es ist auch möglich, wie in Figur 4 schematisch gezeigt, dass Brennstoffspeicher 98 in das Modulgehäuse 64 des Brennstoff-Versorgungsmoduls 28 integriert sind. Es muss dann kein getrenntes Brennstoffspeicher-Modul 36 vorgesehen werden, sondern es ist ein Kombinationsmodul gebildet, welches die Brennstoff-Versorgungseinrichtung 16 und den oder die Brennstoffspeicher umfasst. Ein solches Brennstoff-Versorgungsmodul weist prinzipiell die gleichen funktionellen Komponenten auf, wie anhand des Brennstoff-Versorgungsmoduls 28 beschrieben. Es werden deshalb in Figur 4 die gleichen Bezugszeichen verwendet.

Es ist insbesondere vorgesehen, dass der Brennstoff, welcher an dem Anschluss 84 auskoppelbar ist, auf einen über den Druckschalter 82 vorgegebenen festen Druckwert eingestellt ist. Über die Druckanzeige 86 wird dieser Druckwert angezeigt.

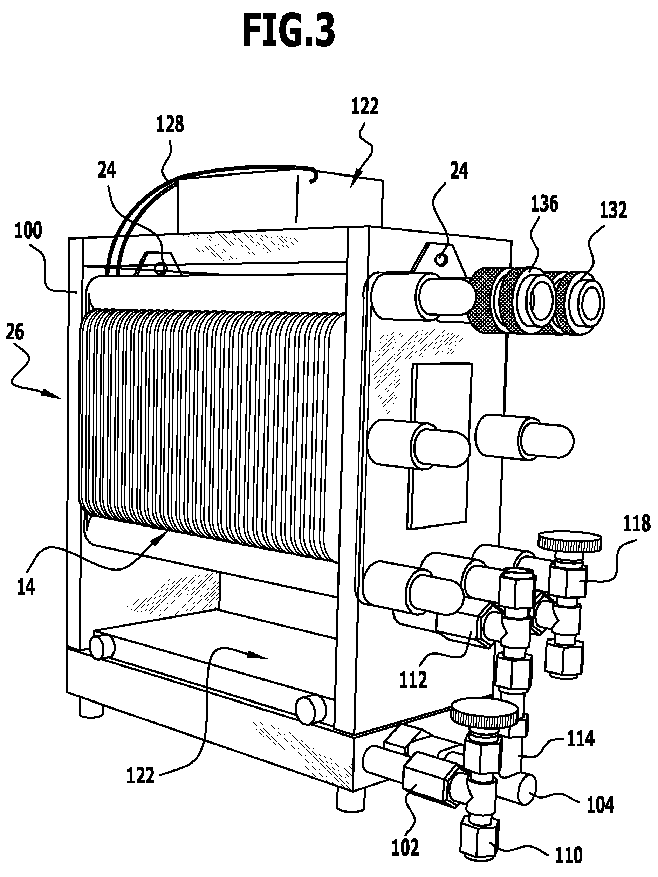

Das Brennstoffzellenmodul 26 weist ein Modulgehäuse 100 auf (Figuren 1 und 3). Das Modulgehäuse 100 ist insbesondere geschlossen mit definierter Kühlluftführung ausgebildet. Beispielsweise ist es durchsichtig.

In dem Modulgehäuse 100 sind der oder die Brennstoffzellenblöcke 14 angeordnet. Ferner ist in dem Modulgehäuse 100 eine Brennstoff-Abführungsleitung 102 angeordnet. An dieser Abführungsleitung 102 sitzt ein zeitlich steuerbares (Sperr-)Ventil 104. Bei diesem handelt es sich insbesondere um ein elektromagnetisches Ventil. Über eine Druckanzeige 106 wird der Druck angezeigt.

Weiterhin kann ein Einstellventil 108 vorgesehen sein, mit dem der Druckabfall bei Öffnung des Ventils 104 eingestellt werden kann.

Die Abführungsleitung 102 mündet in einen Ausgangsanschluss 110, über den nicht verbrauchter Brennstoff und/oder Brennstoff mit erhöhtem Inertgasanteil und/oder Wasseranteil abführbar ist.

In dem Modulgehäuse 100 ist auch eine Oxidator-Abführungsleitung 112 und insbesondere Luft-Abführungsleitung angeordnet. Diese mündet in einen Ausgangsanschluss 114. An der Abführungsleitung 112 ist eine Druckanzeige 116 gekoppelt. Ferner ist ein Einstellventil 118 vorgesehen, um den Volumenstrom der abgeführten Luft einstellen zu können.

An der Abführungsleitung 112 kann ein Temperaturschalter 119 vorgesehen sein.

Das Brennstoffzellenmodul 26 weist einen Steuersignalanschluss 120 auf, über den Steuersignale einkoppelbar sind. Insbesondere ist dabei das Ventil 104 (welches ein Sperrventil ist) ansteuerbar. Dieses Sperrventil 104 wird so gesteuert, dass es entweder offen oder geschlossen ist. Es ist getaktet steuerbar und kann dabei so getaktet geöffnet werden, dass für eine Brennstoffentspannung von dem Brennstoffzellenblock 14 her gesorgt ist.

Der Anschluss 24, über welchen externe elektrische Verbraucher mit elektrischer Leistung versorgt sind, ist an dem Modulgehäuse 100 angeordnet.

Es können auch elektrische Anschlüsse vorgesehen sein (in der Figur 1 nicht gezeigt), über die elektrische Leistung für interne Verbraucher des Brennstoffzellenmoduls 26 einkoppelbar ist.

Über die beschriebenen Anschlüsse ist eine Kommunikationsschnittstelle für das Brennstoffzellenmodul 26 gebildet.

Das Brennstoffzellenmodul 26 bildet eine Einheit, die als Ganzes getrennt von den anderen Modulen positionierbar ist.

Eine Kühlungseinrichtung kann in das Brennstoffzellenmodul 26 integriert sein.

Es kann auch ein separates Kühlmodul 34 vorgesehen sein, welches an das Brennstoffzellenmodul 26 koppelbar ist.

Beispielsweise umfasst ein Kühlmodul 34 einen oder mehrere Lüfter 122, über welche der oder die Brennstoffzellenblöcke 14 mit einem Luftstrom 124 zur Kühlung beaufschlagbar sind. Das Kühlmodul 34 weist einen elektrischen Anschluss auf, über den entsprechende Energie zum Betreiben des oder der Lüfter 122 einkoppelbar ist (in der Zeichnung nicht gezeigt). Ferner kann ein Steuersignalanschluss 126 vorgesehen sein.

Günstig ist es, wenn das Kühlmodul 34 einen oder mehrere Anschlüsse 128 zur Abführung von Abwärmeluft aufweist. Beispielsweise kann dann über entsprechende Verbindungsleitungen die Abwärmeluft an einen Metallhydridspeicher 94 geführt werden, um diesen zur Wasserstoffabgabe zu aktivieren.

Vorteilhafterweise sind das Brennstoffzellenmodul 26, das Brennstoff-Versorgungsmodul 28, das Oxidator-Versorgungsmodul 30 und das Steuermodul 32 getrennt und unabhängig voneinander positionierbar. Die Kommunikation untereinander erfolgt über die entsprechenden Schnittstellen:
Zur direkten Ankopplung des Brennstoffspeicher-Moduls 36 ist beispielsweise eine Kupplung 130 und insbesondere eine Schnellkupplung vorgesehen. Eine Brennstoffleitung ist dann über diese Kupplung gebildet.

Es ist auch möglich, dass eine Verbindung über eine Leitung erfolgt, welche an den Anschluss 66 des Brennstoff-Versorgungsmoduls 28 angekoppelt wird und an die Schnittstelle 90 des Brennstoffspeicher-Moduls 36 angekoppelt wird.

Das Brennstoff-Versorgungsmodul 28 kommuniziert mit dem Brennstoffzellenmodul 26 über seinen Ausgangsanschluss 84 für Brennstoff. An einem Eingangsanschluss 132 des Brennstoffzellenmoduls 26 kann Brennstoff eingekoppelt werden. Zur Führung des Brennstoffs zwischen dem Brennstoff-Versorgungsmodul 28 und dem Brennstoffzellenmodul 26 ist eine Leitung 134 vorgesehen, welche ein von den beiden Modulen getrenntes Element ist. Die Leitung wird je nach Position und Abstand der beiden Module gewählt.

Luft mit Luftsauerstoff als Oxidator lässt sich an dem Ausgangsanschluss 42 des Oxidator-Versorgungsmoduls 30 auskoppeln. Das Brennstoffzellenmodul 26 weist einen Eingangsanschluss 136 auf, über den sich Luft einkoppeln lässt. Die Anschlüsse 42 und 136 lassen sich über eine Leitung 138 verbinden, wobei diese Leitung 138 ein von dem Oxidator-Versorgungsmodul 30 und dem Brennstoffzellenmodul 26 getrenntes Element ist.

Das Steuermodul 32 bildet ebenfalls eine Einheit, welche als Ganzes unabhängig von den anderen Modulen positionierbar ist. Es weist entsprechende Anschlüsse 140a, 140b, 140c, 140d auf, über die Steuersignale an mit Steuersignalen beaufschlagbare Module auskoppelbar sind. An die Anschlüsse lassen sich Steuersignalleitungen 142a usw. koppeln, um die Steuersignale übertragen zu können.

Ferner weist das Steuermodul 32 einen oder mehrere Anschlüsse 144 für elektrische Energie auf. Aus diesen lässt sich elektrische Energie auskoppeln und über entsprechende Leistungen an entsprechende Energieanschlüsse der Module koppeln. Dadurch lassen sich elektrische Verbraucher der entsprechenden Module dann mit Energie versorgen.

Die Brennstoffzellenvorrichtung 10 funktioniert so, dass Zuführungsparameter von Brennstoff (über das Brennstoff-Versorgungsmodul 28) und Oxidator (über das Oxidator-Versorgungsmodul 30) fest vorgegeben werden, wobei auf der Zuführungsseite der Druck des einem Brennstoffzellenblock 14 zugeführten Brennstoffs vorgegeben wird, eine kontinuierliche Wasserstoffabführung aus einem Brennstoffzellenblock 14 gesperrt wird und eine Menge des einem Brennstoffzellenblock 14 zugeführten Brennstoffs durch die Leistungsaufnahme eines (externen) Verbrauchers geregelt wird.

Ein solches Verfahren sowie weitere Verfahrensdetails und die detaillierte Ausbildung der entsprechenden Brennstoffzellenvorrichtung sind in der DE 100 27 600 A1 und DE 100 27 600 C2 sowie der DE 101 27 599 A1 beschrieben.

Insbesondere ist mittels der Steuerungseinrichtung 20 eine Ablaufsteuerung gebildet, welche voreingestellte Steuerungssignale sendet. Eine Regelung der Zuführung ist bei der beschriebenen Verfahrensdurchführung nicht notwendig. Vorzugsweise ist die Brennstoffzellenvorrichtung aus bezüglich der Positionierbarkeit unabhängigen Subsystemen zusammengesetzt, nämlich aus dem Brennstoffzellenmodul 26, dem Brennstoff-Versorgungsmodul 28, dem Oxidator-Versorgungsmodul 30 und dem Steuermodul 32.

Die Module weisen definierte Schnittstellen zur Kommunikation mit anderen Modulen auf. Die Module sind getrennt. In ihnen sind die entsprechenden funktionellen Komponenten fest angeordnet, so dass ein Modul als Einheit positionierbar ist. Verbindungselemente und insbesondere Leitungen verbinden miteinander kooperierende Module.

Pro Modul lassen sich die Betriebsparameter und insbesondere Stoffströme, elektrische Ströme und Signalströme separat einstellen.

Die Module lassen sich getrennt herstellen.

Ein sicherheitsrelevanter Aspekt ist die Brennstoffführung in der Brennstoffzellenvorrichtung 10. Durch die Modulbauweise ist aber vorzugsweise nicht notwendigerweise die Brennstoffzellenvorrichtung 10 als Ganzes betroffen, sondern nur einzelne Module der Brennstoffzellenvorrichtung 10, beispielsweise das Brennstoff-Versorgungsmodul 28 (gegebenenfalls auch das Brennstoffspeicher-Modul 36) sowie das Brennstoffzellenmodul 26 und die Leitung 134. Innerhalb des Brennstoffzellenmoduls 26 und des Brennstoff-Versorgungsmoduls 28 lässt sich der Brennstoff beispielsweise in Bohrungen führen, welche durch Ausnehmungen in einem Vollmaterial gebildet sind. Es sind dadurch keine Rohre notwendig, die leckschlagen können. Auch lassen sich die entsprechenden Module 26 und 28 gasdicht ausbilden, während die gesamte Brennstoffzellenvorrichtung 10 dann nicht mehr gasdicht ausgebildet werden muss.

Weiterhin lassen sich die Module 26 und 28 mit einer Sicherheitsbelüftung an die Umgebung außerhalb des Gesamtsystems versehen.

Durch die Modularisierung der Brennstoffzellenvorrichtung 10 lässt sich diese flexibel aufbauen. Insbesondere ist eine Anpassung an geometrische Gegebenheiten möglich. Weiterhin lässt sich jedes Modul für sich optimieren.

Die Leitungen zwischen Modulen sind unabhängig von den Modulen. Sie lassen sich beispielsweise über Sicherheitskupplungen, wenn Stofftransportleitungen vorgesehen sind, an die Module anschließen.

Auch eine leichte Reparatur oder Austausch von Komponenten der Brennstoffzellenvorrichtung 10 ist möglich, da Module als Ganzes ausgetauscht werden können. Beispielsweise können ein Brennstoff-Versorgungsmodul und/oder ein Brennstoffspeicher-Modul als Ganzes ausgetauscht werden.

Weiterhin ergibt sich auch eine leichte Zerlegbarkeit und Zusammensetzbarkeit der Brennstoffzellenvorrichtung 10.

Insbesondere wenn Metallhydridspeicher 94 eingesetzt werden, dann kann ein Brennstoffspeicher oder ein Brennstoffspeicher-Modul auch ein strukturelles Element einer Anwendung bilden. Insbesondere kann ein solcher Metallhydridspeicher als tragendes Strukturelement eingesetzt werden. Der nötige Brennstoff wird dabei "on board" mitgeführt. Der notwendige Oxidator stammt vorzugsweise aus der Umgebungsluft.

Vorzugsweise ist die Brennstoffzellenvorrichtung 10 luftgekühlt. Eine solche Brennstoffzellenvorrichtung 10 lässt sich auf flexible Weise aufgrund ihres modularen Aufbaus in eine Anwendung integrieren. Der Betrieb muss nicht beaufsichtigt werden. Alternativ hierzu kann auch eine Flüssigkeitskühlung vorgesehen sein.

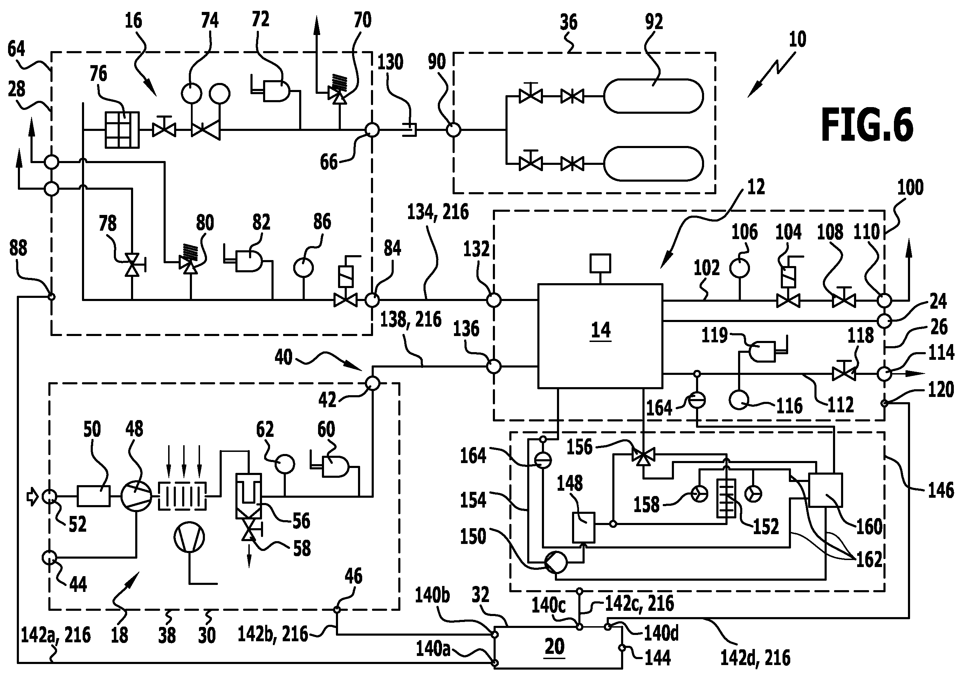

In Figur 6 ist eine der Figur 1 entsprechende schematische Darstellung einer alternativen Ausgestaltung der Brennstoffzellenvorrichtung 10 wiedergegeben, welche sich im Wesentlichen von der in Figur 1 dargestellten Ausführungsform dadurch unterscheidet, dass keine Luftkühlung mit dem Kühlmodul 34, sondern eine Flüssigkeitskühlung mit einem Kühlmodul 146 vorgesehen ist.

Das Kühlmodul 146 umfasst hierzu einen Vorratsbehälter 148 für Kühlmittel, eine Pumpe 150 und eine Hauptkühlungsvorrichtung 152. Mittels Kühlmittelleitungen 154 steht die Brennstoffzelleneinrichtung 12 mit dem Kühlmodul 146 in Fluidverbindung, so dass mittels der Pumpe 150 des Kühlmoduls 146 dem oder den Brennstoffzellenblöcken 14 der Brennstoffzelleneinrichtung 12 gekühltes Kühlmittel zuführbar ist.

In der Brennstoffzelleneinrichtung 12 erwärmtes Kühlmittel wird ferner mittels der Pumpe 150 zu dem Kühlmodul 146 zurückgepumpt, wobei mittels eines Ventils 156 in einer der Kühlmittelleitungen 154 das erwärmte Kühlmittel der Hauptkühlungsvorrichtung 152 zur Kühlung des Kühlmittels zuführbar ist.

Die Hauptkühlungsvorrichtung 152 ist mit Lüftern 158 versehen, um einen effizienten Wärmeübergang und somit eine effiziente Kühlung des die Hauptkühlungsvorrichtung 152 durchströmenden Kühlmittels zu ermöglichen.

Ferner umfasst das Kühlmodul 146 eine Temperaturregelvorrichtung 160, welche mittels Regelleitungen 162 mit den Lüftern 158, dem Ventil 156, der Pumpe 150 und verschiedenen Sensoren, beispielsweise Temperatursensoren 164, zur Regelung der Temperatur des Kühlmittels verbunden ist.

Durch die Verwendung des Kühlmoduls 146 kann eine leistungsstärkere Brennstoffzelleneinrichtung 12 verwendet und dennoch ausreichend gekühlt werden.

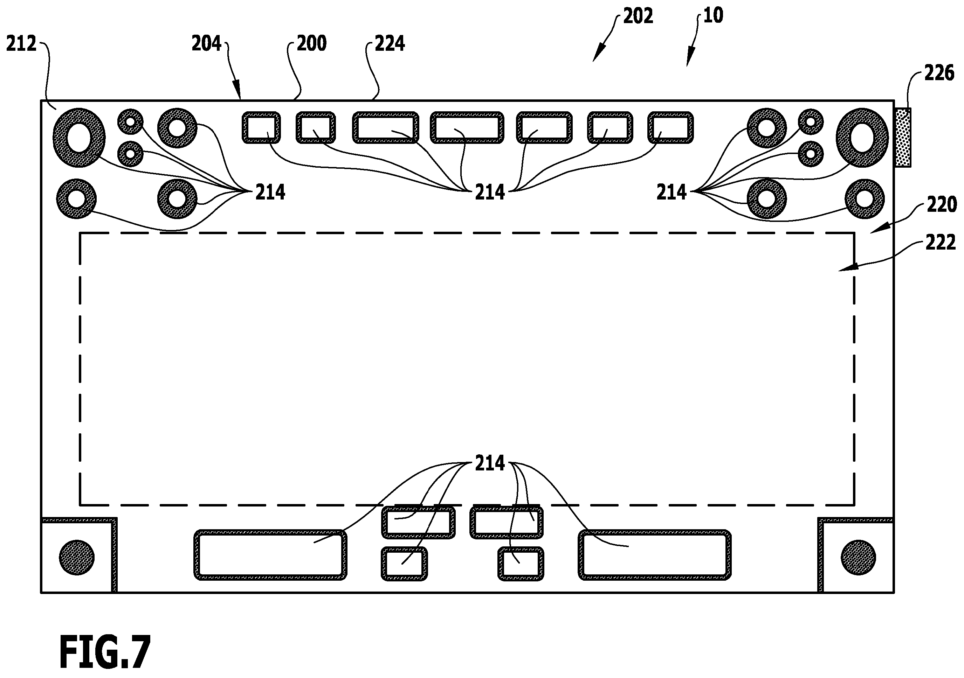

In Figur 7 ist eine schematische Draufsicht von oben auf ein Modulgehäuse 200 einer bevorzugten Ausführungsform der Brennstoffzellenvorrichtung 10 dargestellt.

Das Modulgehäuse 200 ist insbesondere Bestandteil eines Bausatzes 202, welcher mehrere Modulgehäuse 200 umfasst, die baugleich sind und universell für die unterschiedlichen Module der Brennstoffzellenvorrichtung 10 verwendbar sind.

In dem Modulgehäuse 200 ist ein Modul 204 der Brennstoffzellenvorrichtung 10 anordenbar, wobei als Modul 204 wahlweise ein Brennstoff-Versorgungsmodul 28, ein Oxidator-Versorgungsmodul 30, ein Steuermodul 32, ein Kühlmodul 34, ein Brennstoffspeichermodul 36, ein Kühlmodul 146 und/oder ein (noch zu beschreibendes) Kopplungsmodul 248 vorgesehen sein kann.

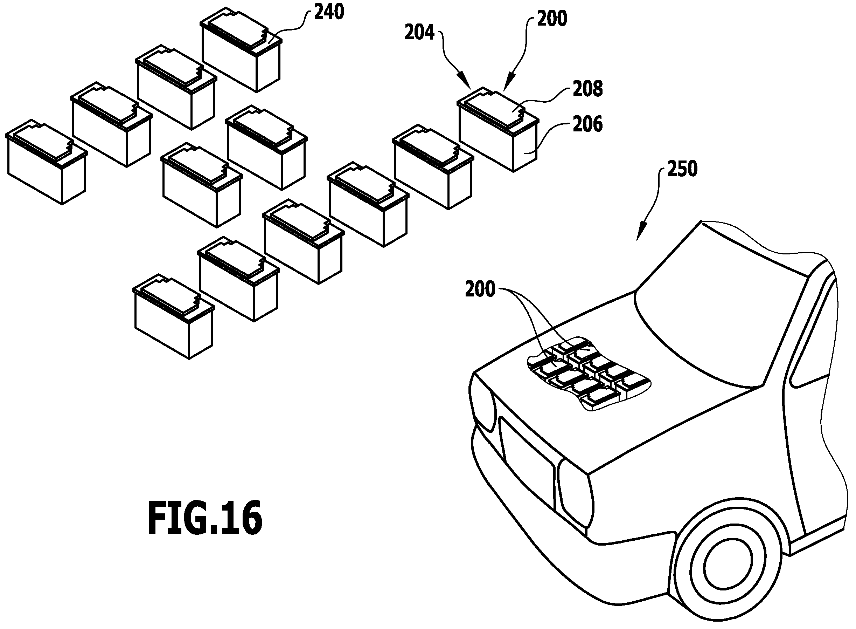

Das Modulgehäuse 200 ist im Wesentlichen quaderförmig ausgebildet und umfasst einen in Figur 16 dargestellten Aufnahmeabschnitt 206, und einen Anschlussabschnitt 208, welcher eine Abdeckung 210 des Aufnahmeabschnitts 206 und im montierten Zustand der Brennstoffzellenvorrichtung 10 eine Oberseite 212 des Modulgehäuses 200 bildet.

An dem Anschlussabschnitt 208, das heißt auf der Oberseite 212 des Modulgehäuses 200 ist eine Vielzahl von Anschlussöffnungen 214 zum Anschließen einer Vielzahl von Verbindungsvorrichtungen 216 vorgesehen.

Verbindungsvorrichtungen 216 sind dabei insbesondere die Stoff-, Energie- und Signalleitungen der Brennstoffzellenvorrichtung 10, beispielsweise die Leitung 134, die Leitung 138 oder die Steuersignalleitungen 142a bis 142d (siehe insbesondere Figuren 1 und 6).

Bei dem in Figur 7 dargestellten Modulgehäuse 200 sind sämtliche Anschlussöffnungen 214 als fertige Anschlussöffnungen 214 dargestellt, so dass an sämtlichen Anschlussöffnungen 214 eine entsprechende Verbindungsvorrichtung 216 angeschlossen werden kann.

Das Modulgehäuse 200 ist jedoch für eine Mehrzahl unterschiedlicher Module 204 der Brennstoffzellenvorrichtung 10 geeignet, so dass je nach in dem Modulgehäuse 200 vorgesehenem Modul 204 lediglich eine Auswahl der Anschlussöffnungen 214 tatsächlich verwendet wird.

Um unerwünschte Öffnungen in dem Modulgehäuse 200 zu vermeiden, welche insbesondere dadurch entstehen würden, dass ungenutzte Anschlussöffnungen 214 als Durchgangsöffnungen in dem Modulgehäuse 200 ausgebildet sind, sind die Mehrzahl der Anschlussöffnungen 214 oder sogar sämtliche Anschlussöffnungen 214 im Zustand vor der Montage der Brennstoffzellenvorrichtung 10, das heißt, wenn die Brennstoffzellenvorrichtung 10 noch als Bausatz 202 vorliegt, vorbereitete Anschlussöffnungen 218.

Die vorbereiteten Anschlussöffnungen 218 sind im nicht montierten Zustand der Brennstoffzellenvorrichtung 10 als Bereiche verringerter Materialstärke des Modulgehäuses 200 ausgebildet, so dass ohne großen Aufwand mittels der vorbereiteten Anschlussöffnungen 218 eine durchgängige, fertige Anschlussöffnung 214 für eine zur Montage des Moduls 204 in dem Modulgehäuse 200 benötigte Verbindungsvorrichtung 216 hergestellt werden kann.

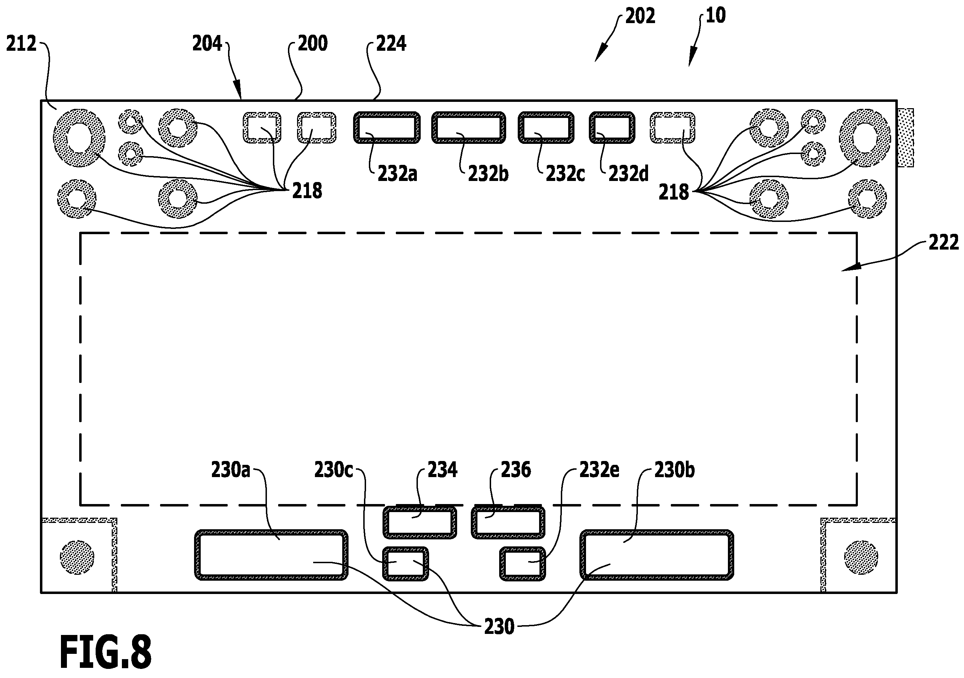

Die einzelnen Anschlussöffnungen 214 des Modulgehäuses 200 sind nachfolgend im Zusammenhang mit den einzelnen Verwendungsmöglichkeiten des Modulgehäuses 200 beschrieben (siehe Figuren 8 bis 14).

Je nach Ausgestaltung des Moduls 204, welches in dem Modulgehäuse 200 angeordnet werden soll, kann eine in dem Modulgehäuse 200 angeordnete vorbereitete Modulkühlvorrichtung 220 genutzt werden. Dies kann beispielsweise durch Heraustrennen eines Bereichs verringerter Materialstärke aus dem Modulgehäuse 200 und die Anordnung einer Modulkühlvorrichtung 222 erfolgen.

Alternativ hierzu kann jedoch auch vorgesehen sein, dass die vorbereitete Modulkühlvorrichtung 220 durch geeignete Wahl des Materials des Modulgehäuses 200, insbesondere des Anschlussabschnitts 208 des Modulgehäuses 200 stets vorhanden ist und somit lediglich Anschlüsse im Innern des Modulgehäuses 200 zur Nutzung der Modulkühlvorrichtung 222, beispielsweise heat pipes, verlegt werden müssen.

Das Modulgehäuse 200 umfasst ferner im montierten Zustand der Brennstoffzellenvorrichtung 10 im Wesentlichen vertikal ausgerichtete Seitenwandungen 224, welche im Wesentlichen parallel zueinander verlaufen, so dass mehrere Modulgehäuse 200, mit gegebenenfalls unterschiedlichen Modulen 204, besonders einfach und stabil nebeneinander angeordnet werden können, so dass die Modulgehäuse 200 mit den Seitenwandungen 224 aneinander angrenzen.

Anschlussöffnungen 214 sind in diesen Seitenwandungen 224 nicht vorgesehen, um eine kompakte Anordnung der Modulgehäuse 200 zu ermöglichen und eine Beschädigung der Verbindungsvorrichtungen 216 an den Anschlussöffnungen 214 auszuschließen.

Höchstens an Seitenwandungen 224 des Modulgehäuses 200, welche im montierten Zustand der Brennstoffzellenvorrichtung 10 nicht an weitere Seitenwandungen 224 des Modulgehäuses 200 angrenzen, kann eine Anschlussöffnung 214 vorgesehen sein. Bei der in Figur 7 dargestellten Ausgestaltung des Modulgehäuses 200 ist beispielsweise ein Auslass 226 vorgesehen, durch welchen Abgase der Brennstoffzellenvorrichtung 10, insbesondere sauerstoffverarmte Restluft mit Wasserdampf und/oder flüssiges Wasser, aus den Modulgehäusen 200, insbesondere aus dem die Brennstoffzelleneinrichtung 12 umfassenden Modulgehäuse 200, entweichen können.

Die Anschlussöffnungen 214 für unterschiedliche Verbindungsvorrichtungen 216 unterscheiden sich vorzugsweise hinsichtlich ihrer Größe und/oder hinsichtlich ihrer Form, so dass ein unbeabsichtigtes Verwechseln der Anschlussöffnungen 214 bei der Anordnung der Verbindungsvorrichtungen 216 ausgeschlossen ist.

Anschlussöffnungen 214 sind insbesondere Stoffaustauschanschlussöffnungen 228, Energieaustauschanschlussöffnungen 230 und Signalaustauschanschlussöffnungen 232.

In Figur 8 ist ein Modulgehäuse 200 dargestellt, welches zur Anordnung eines als Steuermodul 32 ausgebildeten Moduls 204 vorbereitet ist.

Die vorbereiteten Anschlussöffnungen 218 wurden dabei lediglich zur Ausbildung derjenigen Anschlussöffnungen 214 bearbeitet, welche zur Anordnung und Verwendung des Steuermoduls 32 in dem Modulgehäuse 200 notwendig sind.

Bei dem in Figur 8 dargestellten Modulgehäuse 200 sind keine Stoffaustauschanschlussöffnungen 228 ausgebildet. Vielmehr umfasst das Modulgehäuse 200 in dieser Ausgestaltung eine Signalaustauschanschlussöffnung 232a zur Verbindung des Steuermoduls 32 mit dem Brennstoff-Versorgungsmodul 28, eine Signalaustauschanschlussöffnung 232b zur Verbindung des Steuermoduls 32 mit dem Brennstoffzellenmodul 26, eine Signalaustauschanschlussöffnung 232c zur Verbindung des Steuermoduls 32 mit dem Oxidator-Versorgungsmodul 30 und eine Signalaustauschanschlussöffnung 232d zur Verbindung des Steuermoduls 32 mit dem Kühlmodul 34, 146.

Ferner umfasst das in Figur 8 dargestellte Modulgehäuse 200 eine Programmieranschlussöffnung 234 zum Anschließen einer (nicht dargestellten) Programmiervorrichtung zum Programmieren des Steuermoduls 32 und eine Bedienungsanschlussöffnung 236 zum Anschließen eines (nicht dargestellten) Bedienungselements zum Bedienen des Steuermoduls 32.

Als Energieaustauschanschlussöffnungen 230 umfasst das in Figur 8 dargestellte Modulgehäuse 200 eine Energieaustauschanschlussöffnung 230a zum Anschließen einer Leitung, mittels welcher dem Steuermodul 32 die in der Brennstoffzelleneinrichtung 12 erzeugte elektrische Energie zuführbar ist, und eine Energieaustauschanschlussöffnung 230b zum Anschließen einer Verbraucherleitung zur Nutzung der in der Brennstoffzelleneinrichtung 12 erzeugten Energie.

Ein (nicht dargestellter) Starterakkumulator des Steuermoduls 32 kann über eine Verbindungsvorrichtung 216 geladen werden, für welche eine Energieaustauschanschlussöffnung 230c des in Figur 8 dargestellten Modulgehäuses 200 vorgesehen ist.

Mittels einer weiteren Signalaustauschanschlussöffnung 232e kann das Steuermodul 32 an ein (noch zu beschreibendes) Kopplungsmodul 248 gekoppelt werden.

Zur Kühlung der in dem Modulgehäuse 200 angeordneten Bauteile im Betrieb der Brennstoffzellenvorrichtung 10 ist eine Modulkühlvorrichtung 222 vorgesehen.

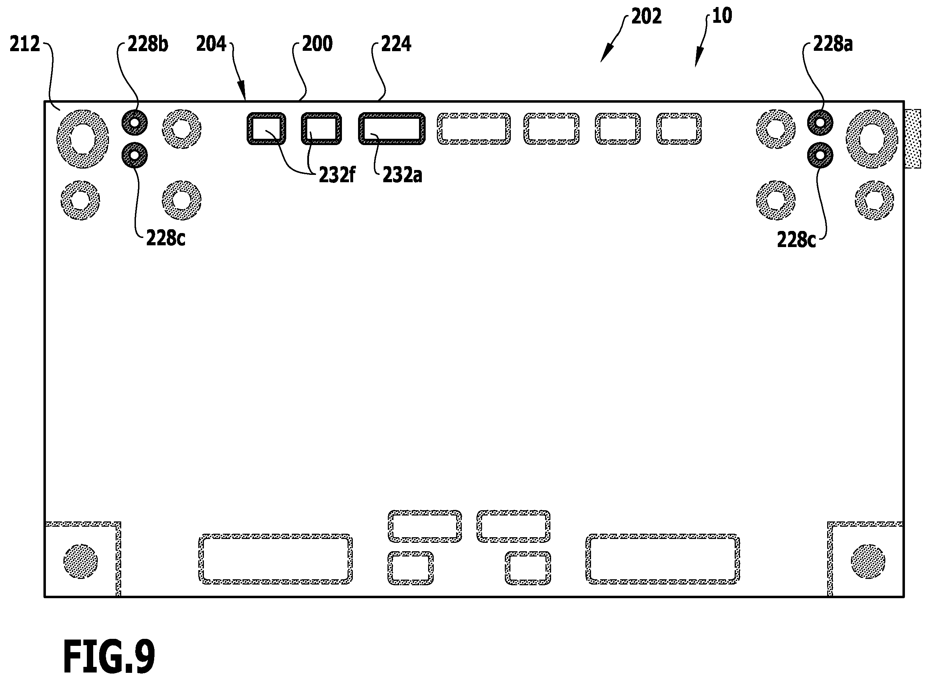

In Figur 9 ist ein Modulgehäuse 200 dargestellt, welches zur Verwendung mit einem als Brennstoff-Versorgungsmodul 28 ausgebildeten Modul 204 vorbereitet ist.

Das Modulgehäuse 200 weist hierzu die Signalaustauschanschlussöffnung 232a zum Verbinden des Brennstoff-Versorgungsmoduls 28 mit dem Steuermodul 32 und ferner beispielsweise zwei Signalaustauschanschlussöffnungen 232f zum Verbinden des Brennstoff-Versorgungsmoduls 28 mit Brennstoffspeicher-Modulen 36 auf.

Ferner weist das Modulgehäuse 200 bei der in Figur 9 dargestellten Ausführungsform vier Stoffaustauschanschlussöffnungen 228 auf, nämlich eine Stoffaustauschanschlussöffnung 228a, zum Anschluss einer Brennstoffzuführleitung, eine Stoffaustauschanschlussöffnung 228b, zum Anschluss einer Brennstoffabführungsleitung und zwei Stoffaustauschanschlussöffnungen 228c zum Verbinden des Brennstoff-Versorgungsmoduls 28 mit zwei Brennstoffspeicher-Modulen 36.

Die übrigen Anschlussöffnungen bleiben vorbereitete Anschlussöffnungen 218.

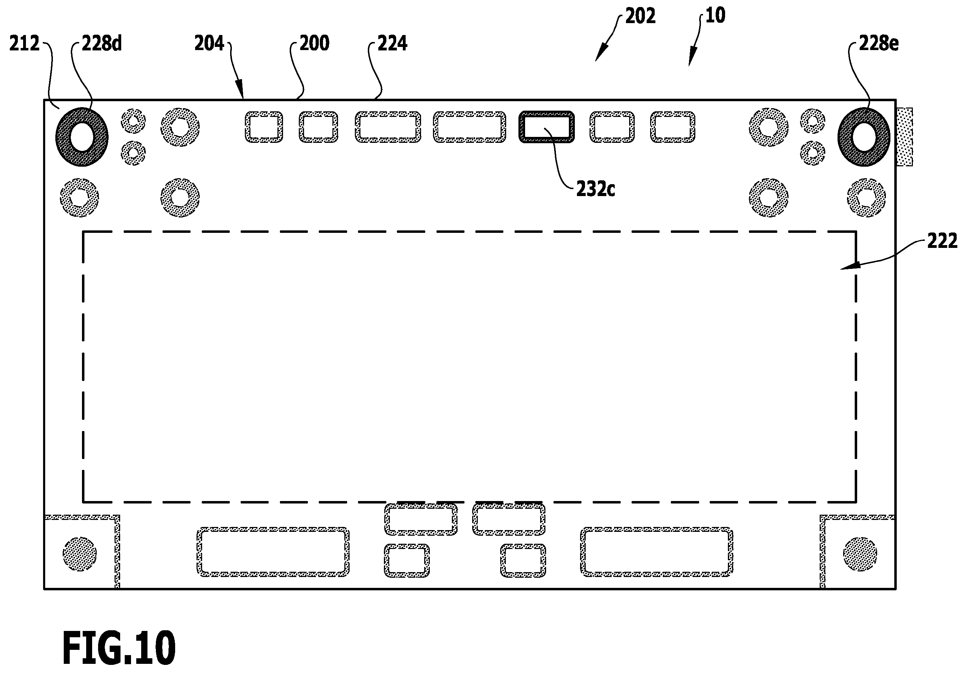

In Figur 10 ist ein Modulgehäuse 200 dargestellt, welches zur Verwendung mit einem Oxidator-Versorgungsmodul 30 vorbereitet ist.

Das Modulgehäuse 200 weist hierzu die Signalaustauschanschlussöffnung 232c zur Verbindung des Oxidator-Versorgungsmoduls 30 mit dem Steuermodul 32 auf.

Ferner weist das Modulgehäuse 200 eine Stoffaustauschanschlussöffnung 228d zum Einlassen von Luft in das Oxidator-Versorgungsmodul 30 auf.

Durch eine Stoffaustauschanschlussöffnung 228e kann die mittels des Oxidator-Versorgungsmoduls 30 vorbereitete Luft über eine entsprechende Verbindungsvorrichtung 216 dem Brennstoffzellenmodul 26 zugeführt werden.

In dem Oxidator-Versorgungsmodul 30 im Betrieb desselben entstehende Wärme wird mittels der Modulkühlvorrichtung 222 des Modulgehäuses 200 abgeleitet.

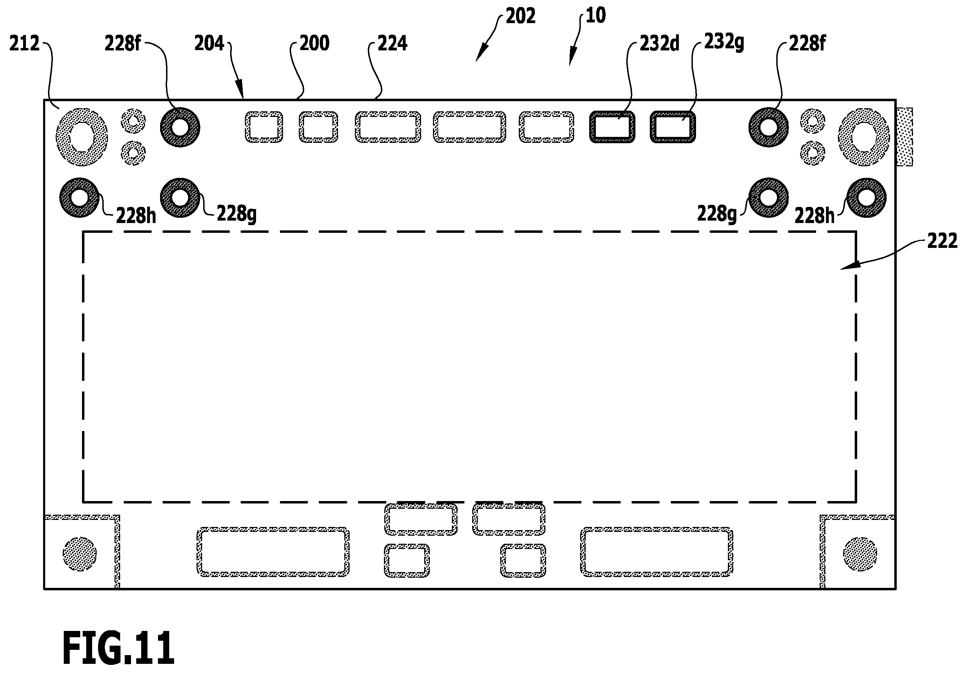

Ein in Figur 11 dargestelltes Modulgehäuse 200 ist zur Verwendung mit einem Kühlmodul 146 vorbereitet.

Das Modulgehäuse 200 weist hierzu die Signalaustauschanschlussöffnung 232d zum Verbinden des Kühlmoduls 146 mit dem Steuermodul 32 auf.

Ferner weist das Modulgehäuse 200 eine Signalaustauschanschlussöffnung 232g auf, an welche eine Verbindungsvorrichtung 216 zur Verbindung des Kühlmoduls 146 mit einem externen Kühler oder Radiator 246 angeschlossen werden kann.

Mittels einer Stoffaustauschanschlussöffnung 228f zur Verbindung des Kühlmoduls 146 mit der Brennstoffzelleneinrichtung 12 kann Kühlmittel von dem Kühlmodul 146 zu der Brennstoffzelleneinrichtung 12 transportiert werden.

Das Modulgehäuse 200 gemäß der in Figur 11 dargestellten Ausführungsform umfasst ferner Stoffaustauschanschlussöffnungen 228g, mittels welchen das Kühlmodul 146 mit Wärmesenken, wie beispielsweise einer (nicht dargestellten) Heizung eines Fahrzeugs, einem Sorptionsspeicher (beispielsweise einem Metallhydridspeicher) oder einer Akkuheizung verbunden werden kann, um die im Betrieb der Brennstoffzellenvorrichtung 10 entstehende Wärme nutzen zu können. Möglich ist jedoch auch eine Verbindung der Stoffaustauschanschlussöffnungen 228g miteinander, wenn die im Betrieb der Brennstoffzelleneinrichtung 12 entstehende Wärme nicht genutzt werden soll.

Über die Stoffaustauschanschlussöffnungen 228h kann schließlich mittels einer geeigneten Verbindungsvorrichtung 216 eine Verbindung zu dem Kühler oder Radiator 246 hergestellt werden.

Die beim Betrieb des Kühlmoduls 146 entstehende Wärme wird mittels einer in dem Modulgehäuse 200 angeordneten Modulkühlvorrichtung 222 abgeführt.

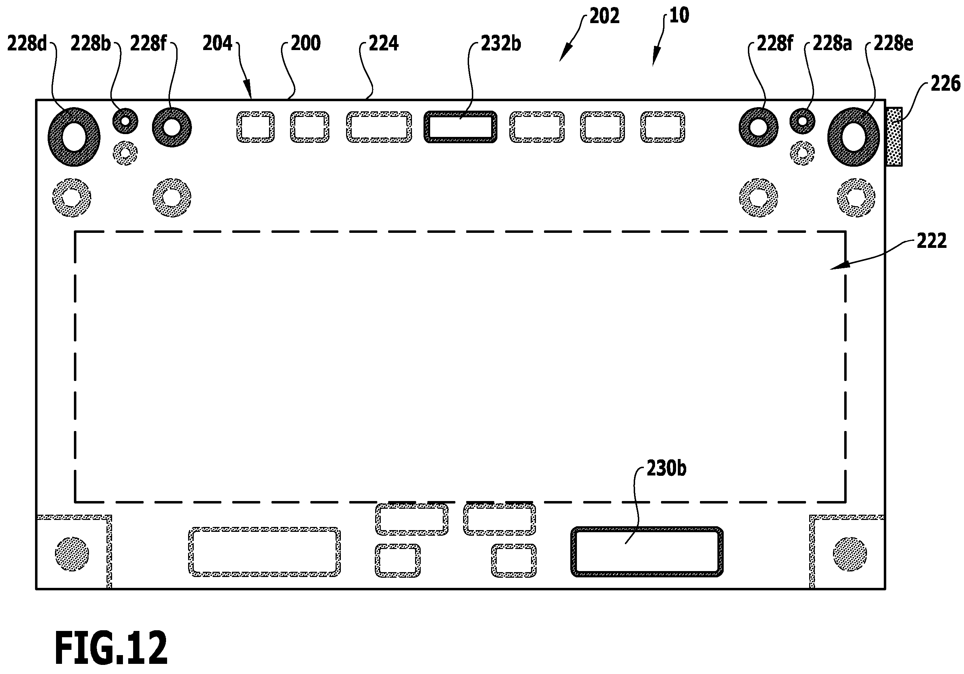

Das in Figur 12 dargestellte Modulgehäuse 200 ist zur Verwendung mit dem Brennstoffzellenmodul 26 vorbereitet.

Das Modulgehäuse 200 weist hierzu die Signalaustauschanschlussöffnung 232b zum Anschließen des Brennstoffzellenmoduls 26 an das Steuermodul 32 auf.

Die in dem Brennstoffzellenmodul 26 erzeugte elektrische Energie wird über eine Leitung abgeleitet. Zum Anschluss dieser Leitung ist an dem Modulgehäuse 200 gemäß Figur 12 die Energieaustauschanschlussöffnung 230b vorgesehen.

Die zum Betrieb der Brennstoffzelleneinrichtung 12 des Brennstoffzellenmoduls 26 benötigten Betriebsstoffe werden dem Brennstoffzellenmodul 26 mittels der Stoffaustauschanschlussöffnungen 228a, 228b, 228d, 228e und 228f zugeführt.

Die Abgase der Brennstoffzelleneinrichtung 12 werden über den Auslass 226 abgegeben.

Eine zusätzliche interne Kühlung erfolgt beispielsweise mittels der Modulkühlvorrichtung 222.

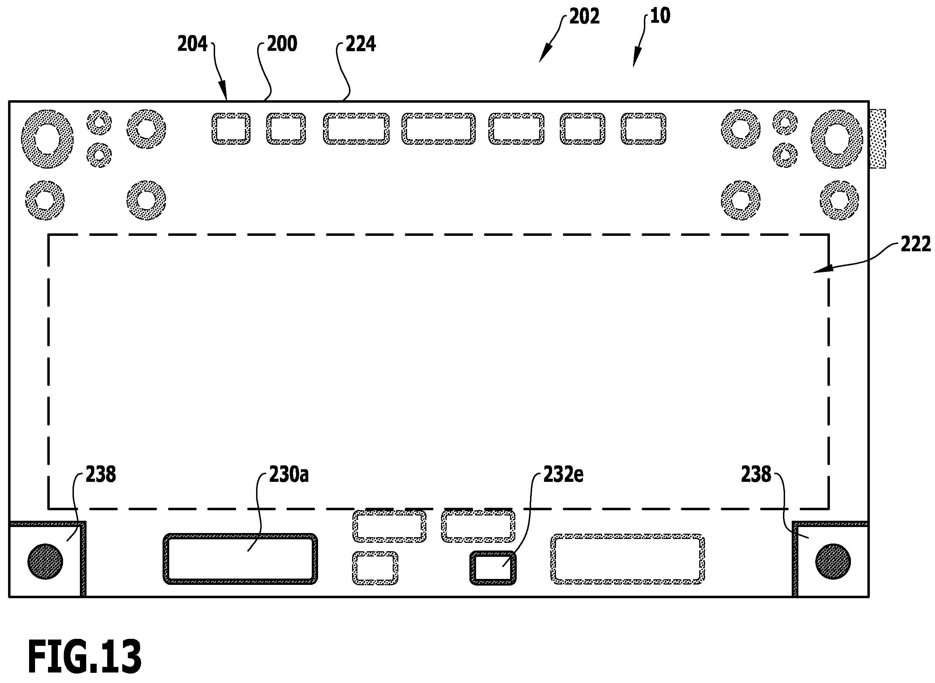

Das in Figur 13 dargestellte Modulgehäuse 200 ist zur Verwendung mit einem Kopplungsmodul 248 zur Kopplung der Brennstoffzellenvorrichtung 10 an eine oder mehrere Batterievorrichtungen 240 vorgesehen und umfasst hierzu die Signalaustauschanschlussöffnung 232e, die Energieaustauschanschlussöffnung 230a und Batterieanschlüsse 238 zum Anschließen des Kopplungsmoduls an die Batterievorrichtungen 240. Eine interne Kühlung erfolgt mittels der Modulkühlvorrichtung 222.

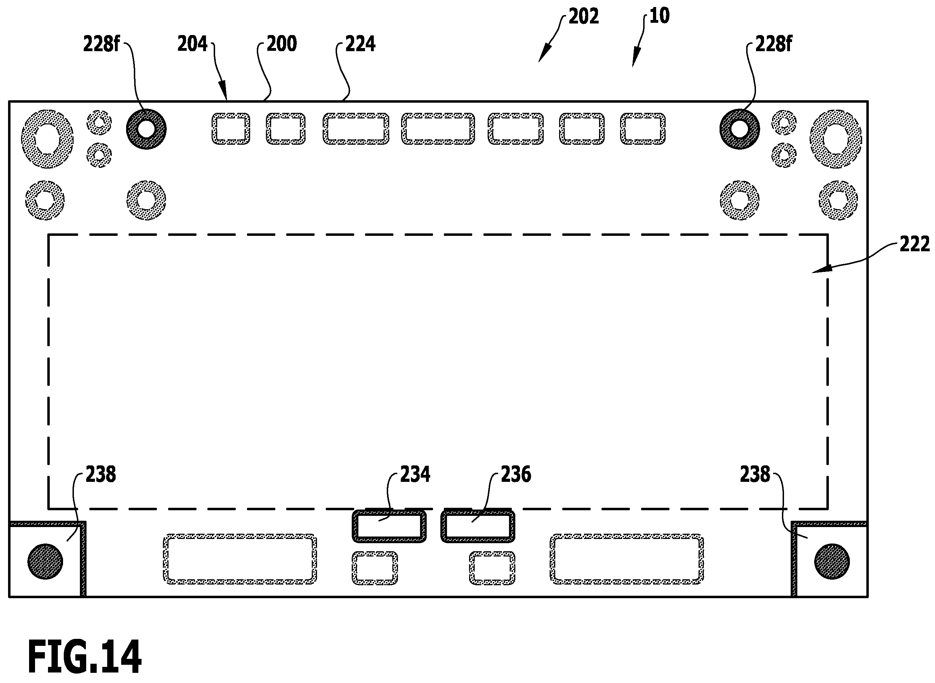

In Figur 14 ist ein Modulgehäuse 200 dargestellt, welches zur Verwendung mit einer Batterievorrichtung 240 vorbereitet ist.

Das Modulgehäuse 200 weist hierzu die Programmierungsanschlussöffnung 234, die Bedienungsanschlussöffnung 236, die Stoffaustauschanschlussöffnungen 228f, die Batterieanschlüsse 238 und die Modulkühlvorrichtung 222 auf.

Mittels des Kopplungsmoduls 248 ist insbesondere elektrische Energie, welche mittels der Brennstoffzelleneinrichtung 12 bereitgestellt und von einem Verbraucher nicht umgehend genutzt wird, auf die Batterievorrichtungen 240 zur Speicherung der Energie übertragbar.

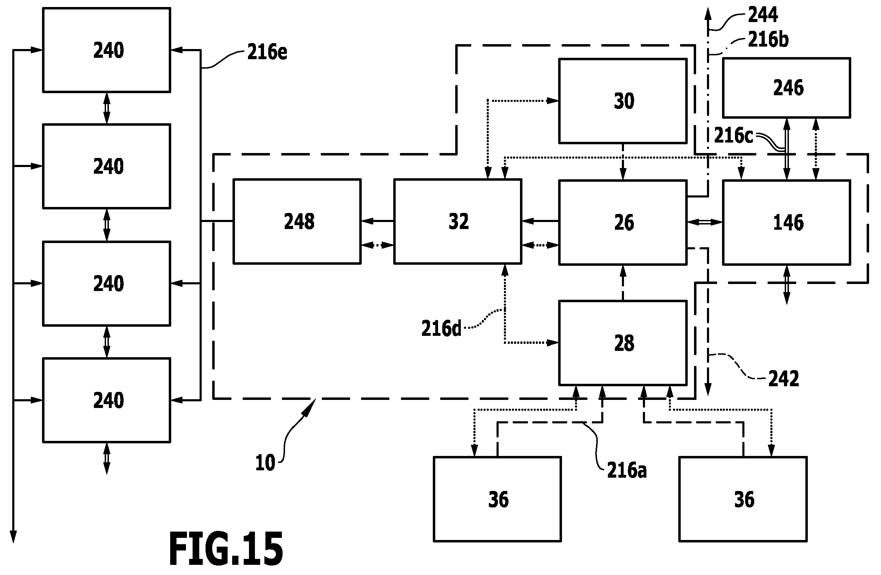

Wie Figur 15 zu entnehmen ist, sind bei der Brennstoffzellenvorrichtung 10 verschiedene Verbindungsvorrichtungen 216 vorgesehen, nämlich eine Verbindungsvorrichtung 216a, mit welcher Wasserstoff übertragbar ist, eine Verbindungsvorrichtung 216b, mit welcher Luft übertragbar ist, eine Verbindungsvorrichtung 216c, mit welcher Kühlmittel übertragbar ist, eine Verbindungsvorrichtung 216d zur Übertragung eines Signals oder einer geringen Menge elektrischer Energie und eine Verbindungsvorrichtung 216e zur Übertragung eines Großteils der mittels der Brennstoffzelleneinrichtung 12 erzeugten elektrischen Energie.

Wie Figur 15 zu entnehmen ist, sind bei der dargestellten Ausgestaltung der Brennstoffzellenvorrichtung 10 die wasserstoffführenden Verbindungsvorrichtungen 216a zwischen den Brennstoffspeicher-Modulen 36 und dem Brennstoff-Versorgungsmodul 28 sowie zwischen dem Brennstoff-Versorgungsmodul 28 und dem Brennstoffzellenmodul 26 vorgesehen. Ferner ist bei dem Brennstoffzellenmodul 26 ein wasserstoffführender Spülausgang 242 vorgesehen.

Eine luftführende Verbindungsvorrichtung 216b ist zwischen dem Oxidator-Versorgungsmodul 30 und dem Brennstoffzellenmodul 26 vorgesehen.

Das Brennstoffzellenmodul 26 umfasst ferner einen Luftausgang 244.

Kühlmittelführende Verbindungsvorrichtungen 216c sind zwischen einem Kühler/Radiator 246 und dem Kühlmodul 146, zwischen dem Kühlmodul 146 und dem Brennstoffzellenmodul 26 sowie zwischen dem Kühlmodul 146 und einer (nicht dargestellten) Thermoschnittstelle vorgesehen.

Ferner kann vorgesehen sein, dass die Batterievorrichtungen 240 untereinander und/oder mit einer Thermoschnittstelle und/oder mit dem Kühlmodul 146 mittels einer kühlmittelführenden Verbindungsvorrichtung 216c verbunden sind.

Eine Signalübertragung und/oder eine Übertragung von geringen Mengen elektrischer Energie zum Betrieb der Module 204 erfolgt mittels Verbindungsvorrichtungen 216d zwischen folgenden Modulen 204:
- zwischen dem Steuermodul 32 und dem Kopplungsmodul 248;
- zwischen dem Steuermodul 32 und dem Oxidator-Versorgungsmodul 30;
- zwischen dem Steuermodul 32 und dem Brennstoffzellenmodul 26;
- zwischen dem Steuermodul 32 und dem Brennstoff-Versorgungsmodul 28;
- zwischen dem Steuermodul 32 und dem Kühlmodul 146;
- zwischen dem Brennstoff-Versorgungsmodul 28 und den Brennstoffspeicher-Modulen 36; und/oder
- zwischen dem Kühlmodul 146 und dem Kühler/Radiator 246.

Eine Übertragung der mittels der Brennstoffzelleneinrichtung 12 erzeugten elektrischen Energie erfolgt mittels Verbindungsvorrichtungen 216e von dem Brennstoffzellenmodul 26 auf das Steuermodul 32, von dem Steuermodul 32 auf das Kopplungsmodul 248 und von dem Kopplungsmodul 248 auf die Batterievorrichtungen 240.

Ferner kann vorgesehen sein, dass eine Energiezufuhr zu den Batterievorrichtungen 240 von einer externen Energiequelle aus erfolgt.

Vorzugsweise sind das Kopplungsmodul 248, das Steuermodul 32, das Oxidator-Versorgungsmodul 30, das Brennstoff-Versorgungsmodul 28, das Brennstoffzellenmodul 26 und das Kühlmodul 146 oder ein Kühlmodul 34 in baugleichen, universell verwendbaren Modulgehäusen 200 angeordnet.

Wie insbesondere Figur 16 zu entnehmen ist, ergibt sich durch die Verwendung von baugleichen Modulgehäusen 200 eine besonders einfache Möglichkeit der Anordnung der Brennstoffzellenvorrichtung 10, nämlich dadurch, dass die Modulgehäuse 200 nebeneinander gepackt werden können und somit einfach in einem Fahrzeug 250 anordenbar sind.

Insbesondere dann, wenn die Batterievorrichtungen 240 und die Module 204 der Brennstoffzellenvorrichtung 10 in baugleichen Modulgehäusen 200 angeordnet sind, können in einem batteriebetriebenen Fahrzeug 250 angeordnete Batterievorrichtungen 240 besonders einfach durch eine Brennstoffzellenvorrichtung 10 ersetzt werden, so dass das Fahrzeug 250 durch einen einfachen Umbau nicht mehr nur batteriebetrieben, sondern auch mit Wasserstoff als Energiequelle nutzbar ist.

### Bezugszeichenliste

- 10: Brennstoffzellenvorrichtung
- 12: Brennstoffzelleneinrichtung
- 14: Brennstoffzellenblock
- 16: Brennstoff-Versorgungseinrichtung
- 18: Oxidator-Versorgungseinrichtung
- 20: Steuerungseinrichtung
- 22: Kühlungseinrichtung
- 24: Anschluss für Verbraucher
- 26: Brennstoffzellenmodul
- 28: Brennstoff-Versorgungsmodul
- 30: Oxidator-Versorgungsmodul
- 32: Steuermodul
- 34: Kühlmodul
- 36: Brennstoffspeicher-Modul
- 38: Modulgehäuse
- 40: Kommunikationsschnittstelle
- 42: Ausgangsanschluss
- 44: elektrischer Anschluss
- 46: Signalanschluss
- 48: Luftverdichter
- 50: Filter
- 52: Luftzuführungsöffnung
- 54: Luftförderer und Kühler
- 56: Wasserabscheider
- 58: Stellelement
- 60: Druckschalter
- 62: Druckanzeige
- 64: Modulgehäuse
- 66: Anschluss zur Einkopplung von Brennstoff
- 68: Brennstoffführung
- 70: Sicherheitsventil
- 72: Druckschalter
- 74: Druckminderer-/Einstellvorrichtung
- 76: Flammensperre
- 78: Ablassventil
- 80: Sicherheitsventil
- 82: Druckschalter
- 84: Anschluss
- 86: Druckanzeige
- 88: Steuersignalanschluss
- 90: Schnittstelle
- 92: Brennstoffspeicher
- 94: Metallhydridspeicher
- 96: Strangpressprofil
- 98: Brennstoffspeicher
- 100: Modulgehäuse
- 102: Brennstoff-Abführungsleitung
- 104: Ventil
- 106: Druckanzeige
- 108: Einstellventil
- 110: Ausgangsanschluss
- 112: Oxidator-Abführungsleitung
- 114: Ausgangsanschluss
- 116: Druckanzeige
- 118: Einstellventil
- 119: Temperaturschalter
- 120: Steuersignalanschluss
- 122: Lüfter
- 124: Luftstrom
- 126: Steuersignalanschluss
- 128: Anschlüsse
- 130: Kupplung
- 132: Eingangsanschluss
- 134: Leitung
- 136: Eingangsanschluss
- 138: Leitung
- 140: Anschluss
- 140a-d: Anschluss
- 142a-d: Steuersignalleitung
- 144: Anschluss für elektrische Energie
- 146: Kühlmodul
- 148: Vorratsbehälter
- 150: Pumpe
- 152: Hauptkühlungsvorrichtung
- 154: Kühlmittelleitungen
- 156: Ventil
- 158: Lüfter
- 160: Temperaturregelvorrichtung
- 162: Regelleitungen
- 164: Temperatursensor
- 200: Modulgehäuse
- 202: Bausatz
- 204: Modul
- 206: Aufnahmeabschnitt
- 208: Anschlussabschnitt
- 210: Abdeckung
- 212: Oberseite
- 214: Anschlussöffnung
- 216: Verbindungsvorrichtung
- 216a-e: Verbindungsvorrichtung
- 218: vorbereitete Anschlussöffnung
- 220: vorbereitete Modulkühlvorrichtung
- 222: Modulkühlvorrichtung
- 224: Seitenwandung
- 226: Auslass
- 228: Stoffaustauschanschlussöffnung
- 228a-h: Stoffaustauschanschlussöffnung
- 230: Energieaustauschanschlussöffnung
- 230a-c: Energieaustauschanschlussöffnung
- 232: Signalaustauschanschlussöffnung
- 232a-g: Signalaustauschanschlussöffnung
- 234: Programmierungsanschlussöffnung
- 236: Bedienungsanschlussöffnung
- 238: Batterieanschluss
- 240: Batterievorrichtung
- 242: Spülausgang
- 244: Luftausgang
- 246: Kühler/Radiator
- 248: Kopplungsmodul
- 250: Fahrzeug

## Patentansprüche

1. Bausatz (202) für eine modulare Brennstoffzellenvorrichtung (10), welche mehrere separate Module (204) umfasst, wobei mindestens ein Modul (204) als ein Oxidator-Versorgungsmodul (30) und mindestens ein Modul (204) als ein Brennstoffzellenmodul (26) ausgebildet ist, wobei der Bausatz (202) mehrere Modulgehäuse (200) umfasst, welche baugleich sind und welche universell für die unterschiedlichen Module (204) der Brennstoffzellenvorrichtung (10) verwendbar sind,
**dadurch gekennzeichnet,**
**dass** die Modulgehäuse (200) zumindest vor der Montage der Brennstoffzellenvorrichtung (10) miteinander identische Anschlussabschnitte (208) zum Anschließen von Verbindungsvorrichtungen (216) für die Module (204) der Brennstoffzellenvorrichtung (10) umfassen, wobei der Anschlussabschnitt (208) eines jeden Modulgehäuses (200) mindestens eine vorbereitete Anschlussöffnung (218) aufweist, welche ein Bereich verringerter Materialstärke des Modulgehäuses (200) ist, der die Form einer im montierten Zustand der Brennstoffzellenvorrichtung (10) zum Anschließen einer Verbindungsvorrichtung (216) des Moduls (204) nötigen Durchgangsöffnung aufweist.

2. Bausatz (202) nach Anspruch 1, **dadurch gekennzeichnet, dass** die Modulgehäuse (200) dieselben äußeren Abmessungen aufweisen.

3. Bausatz (202) nach einem der Ansprüche 1 oder 2, **dadurch gekennzeichnet, dass** die Modulgehäuse (200) miteinander identische Aufnahmeabschnitte (206) zum Aufnehmen der Module (204) der Brennstoffzellenvorrichtung (10) umfassen.

4. Bausatz (202) nach einem der Ansprüche 1 bis 3, **dadurch gekennzeichnet, dass** der Anschlussabschnitt (208) eines jeden Modulgehäuses (200) eine Mehrzahl von vorbereiteten Anschlussöffnungen (218) aufweist, wobei für unterschiedliche Verbindungsvorrichtungen (216) für die Module (204) der Brennstoffzellenvorrichtung (10) unterschiedliche vorbereitete Anschlussöffnungen (218) vorgesehen sind.

5. Bausatz (202) nach einem der Ansprüche 1 bis 4, **dadurch gekennzeichnet, dass** der Anschlussabschnitt (208) eines jeden Modulgehäuses (200) an einer im montierten Zustand der Brennstoffzellenvorrichtung (10) oberen Oberseite (212) des Modulgehäuses (200) angeordnet ist.

6. Bausatz (202) nach einem der Ansprüche 1 bis 5, **dadurch gekennzeichnet, dass** der Anschlussabschnitt (208) eines jeden Modulgehäuses (200) eine Abdeckung für einen Aufnahmeabschnitt (206) des jeweiligen Modulgehäuses (200) bildet.

7. Bausatz (202) nach einem der Ansprüche 1 bis 6, **dadurch gekennzeichnet, dass** die Modulgehäuse (200) eine Modulkühlvorrichtung (222) oder eine vorbereitete Modulkühlvorrichtung (220) umfassen.

8. Bausatz (202) nach Anspruch 7, **dadurch gekennzeichnet, dass** die Modulkühlvorrichtung (222) oder die vorbereitete Modulkühlvorrichtung (220) an einer im montierten Zustand der Brennstoffzellenvorrichtung (10) oberen Oberseite (212) des Modulgehäuses (200) angeordnet ist.

9. Bausatz (202) nach einem der Ansprüche 1 bis 8, **dadurch gekennzeichnet, dass** jedes der Modulgehäuse (200) mindestens zwei parallel zueinander verlaufende Wandungen (224) umfasst.

10. Bausatz (202) nach Anspruch 9, **dadurch gekennzeichnet, dass** die mindestens zwei parallel zueinander verlaufenden Wandungen (224) im montierten Zustand der Brennstoffzellenvorrichtung (10) im Wesentlichen vertikale Seitenwände (224) des Modulgehäuses (200) bilden.

11. Brennstoffzellenvorrichtung (10), umfassend mehrere Module (204), wobei mindestens ein Modul (204) als ein Oxidator-Versorgungsmodul (30) und mindestens ein Modul (204) als ein Brennstoffzellenmodul (26) ausgebildet ist, **dadurch gekennzeichnet, dass** die Brennstoffzellenvorrichtung (10) aus einem Bausatz (202) nach einem der Ansprüche 1 bis 10 herstellbar ist.

12. Brennstoffzellenvorrichtung (10) nach Anspruch 11, **dadurch gekennzeichnet, dass** die Brennstoffzellenvorrichtung (10) mindestens ein als Brennstoff-Versorgungsmodul (28), mindestens ein als Kühlmodul (34), mindestens ein als Steuermodul (32) zur Steuerung der Brennstoffzellenvorrichtung (10) und/oder mindestens ein als Kopplungsmodul (248) zur Kopplung der Brennstoffzellenvorrichtung (10) mit einer Batterievorrichtung (240) ausgebildetes Modul (204) umfasst, welche jeweils in einem Modulgehäuse (200) angeordnet sind.

13. Fahrzeug (250), umfassend mehrere Batterievorrichtungen (240) und mindestens eine Brennstoffzellenvorrichtung (10) nach einem der Ansprüche 11 oder 12.

14. Fahrzeug (250) nach Anspruch 13, **dadurch gekennzeichnet, dass** die Modulgehäuse (200) für die Module (204) der Brennstoffzellenvorrichtung (10) und Gehäuse für die Batterievorrichtungen (240) im Wesentlichen dieselben Abmessungen aufweisen.

## Claims

1. A kit (202) for a modular fuel cell device (10) that includes a plurality of separate modules (204), wherein at least one module (204) takes the form of an oxidising agent supply module (30) and at least one module (204) takes the form of a fuel cell module (26), wherein the kit (202) includes a plurality of module housings (200) that are of the same construction and are universally usable for the different modules (204) of the fuel cell device (10),
**characterised in that**
the module housings (200) include terminal connector sections (208) that are mutually identical, at least before assembly of the fuel cell device (10), for the terminal connection of connection devices (216) for the modules (204) of the fuel cell device (10), wherein the terminal connector section (208) of each module housing (200) has at least one prefabricated terminal connection opening (218), which is a region of reduced material thickness of the module housing (200), and this region has the form of a passage opening that is required in the assembled condition of the fuel cell device (10) for the terminal connection of a connection device (216) of the module (204).

2. A kit (202) according to Claim 1, **characterised in that** the module housings (200) have the same external dimensions.

3. A kit (202) according to one of Claims 1 or 2, **characterised in that** the module housings (200) include mutually identical receiving sections (206) for receiving the modules (204) of the fuel cell device (10).

4. A kit (202) according to one of Claims 1 to 3, **characterised in that** the terminal connector section (208) of each module housing (200) has a plurality of prefabricated terminal connection openings (218), wherein different prefabricated terminal connection openings (218) are provided for different connection devices (216) for the modules (204) of the fuel cell device (10).

5. A kit (202) according to one of Claims 1 to 4, **characterised in that** the terminal connector section (208) of each module housing (200) is arranged at an upper side (212) of the module housing (200), this upper side (212) being at the top in the assembled condition of the fuel cell device (10).

6. A kit (202) according to one of Claims 1 to 5, **characterised in that** the terminal connector section (208) of each module housing (200) forms a cover for a receiving section (206) of the respective module housing (200).

7. A kit (202) according to one of Claims 1 to 6, **characterised in that** the module housings (200) include a module cooling device (222) or a prefabricated module cooling device (220).

8. A kit (202) according to Claim 7, **characterised in that** the module cooling device (222) or the prefabricated module cooling device (220) is arranged at an upper side (212) of the module housing (200), this upper side (212) being at the top in the assembled condition of the fuel cell device (10).

9. A kit (202) according to one of Claims 1 to 8, **characterised in that** each of the module housings (200) includes at least two mutually parallel walls (224).

10. A kit (202) according to Claim 9, **characterised in that** the at least two mutually parallel walls (224) form side walls (224) of the module housing (200) that are substantially vertical in the assembled condition of the fuel cell device (10).

11. A fuel cell device (10), including a plurality of modules (204), wherein at least one module (204) takes the form of an oxidising agent supply module (30) and at least one module (204) takes the form of a fuel cell module (26), **characterised in that** the fuel cell device (10) is producible from a kit (202) according to one of Claims 1 to 10.

12. A fuel cell device (10) according to Claim 11, **characterised in that** the fuel cell device (10) includes at least one module (204) that takes the form of a fuel supply module (28), at least one module (204) that takes the form of a cooling module (34), at least one module (204) that takes the form of a control module (32) for controlling the fuel cell device (10), and/or at least one module (204) that takes the form of a coupling module (248) for coupling the fuel cell device (10) to a battery device (240), these modules (204) each being arranged in a module housing (200).

13. A vehicle (250), including a plurality of battery devices (240) and at least one fuel cell device (10) according to one of Claims 11 or 12.

14. A vehicle (250) according to Claim 13, **characterised in that** the module housings (200) for the modules (204) of the fuel cell device (10) and housings for the battery devices (240) have substantially the same dimensions.

## Revendications

1. Kit de montage (202) pour un dispositif de pile à combustible (10) modulaire, qui comprend plusieurs modules (204) séparés, au moins un module (204) étant réalisé sous la forme d'un module d'alimentation en oxydant (30) et au moins un module (204) étant réalisé sous la forme d'un module de pile à combustible (26), le kit de montage (202) comprenant plusieurs boîtiers de module (200), qui présentent une structure identique et qui peuvent être utilisés de manière universelle pour les différents modules (204) du dispositif de pile à combustible (10), **caractérisé en ce**
**que** les boîtiers de module (200) comprennent au moins, avant le montage du dispositif de pile à combustible (10), des sections de raccordement (208) identiques les uns aux autres servant à raccorder des dispositifs d'assemblage (216) pour les modules (204) du dispositif de pile à combustible (10), la section de raccordement (208) de chaque boîtier de module (200) présentant au moins une ouverture de raccordement (218) préparée, qui est une zone présentant une épaisseur de matériau réduite du boîtier de module (200), laquelle présente la forme d'une ouverture de passage utile, dans l'état monté du dispositif de pile à combustible (10), au raccordement d'un dispositif d'assemblage (216) du module (204).

2. Kit de montage (202) selon la revendication 1, **caractérisé en ce que** les boîtiers de module (200) présentent les mêmes dimensions extérieures.

3. Kit de montage (202) selon l'une quelconque des revendications 1 ou 2, **caractérisé en ce que** les boitiers de module (200) comprennent des sections de réception (206) identiques les unes aux autres servant à recevoir les modules (204) du dispositif de pile à combustible (10).

4. Kit de montage (202) selon l'une quelconque des revendications 1 à 3, **caractérisé en ce que** la section de raccordement (208) de chaque boitier de module (200) présente une multitude d'ouvertures de raccordement (218) préparées, différentes ouvertures de raccordement (218) préparées étant prévues pour différents dispositifs d'assemblage (216) pour les modules (204) du dispositif de pile à combustible (10).

5. Kit de montage (202) selon l'une quelconque des revendications 1 à 4, **caractérisé en ce que** la section de raccordement (208) de chaque boîtier de module (200) est disposée au niveau d'un côté supérieur (212), supérieur dans l'état monté du dispositif de pile à combustible (10), du boîtier de module (200).

6. Kit de montage (202) selon l'une quelconque des revendications 1 à 5, **caractérisé en ce que** la section de raccordement (208) de chaque boîtier de module (200) forme un recouvrement pour une section de réception (206) du boîtier de module (200) respectif.

7. Kit de montage (202) selon l'une quelconque des revendications 1 à 6, **caractérisé en ce que** les boîtiers de module (200) comprennent un dispositif de refroidissement de module (222) ou un dispositif de refroidissement de module (220) préparé.

8. Kit de montage (202) selon la revendication 7, **caractérisé en ce que** le dispositif de refroidissement de module (222) ou le dispositif de refroidissement de module (220) préparé est disposé au niveau d'un côté supérieur (212), supérieur dans l'état monté du dispositif de pile à combustible (10), du boîtier de module (200).

9. Kit de montage (202) selon l'une quelconque des revendications 1 à 8, **caractérisé en ce que** chaque boîtier de module (200) comprend au moins deux cloisons (224) s'étendant de manière parallèle l'une par rapport à l'autre.

10. Kit de montage (202) selon la revendication 9, **caractérisé en ce que** les deux cloisons (224) ou plus s'étendant de manière parallèle les unes par rapport aux autres forment, dans l'état monté du dispositif de pile à combustible (10), des parois latérales (224) sensiblement verticales du boîtier de module (200).

11. Dispositif de pile à combustible (10), comprenant plusieurs modules (204), au moins un module (204) étant réalisé sous la forme d'un module d'alimentation en oxydant (30) et au moins un module (204) étant réalisé sous la forme d'un module de pile à combustible (26), **caractérisé en ce que** le dispositif de pile à combustible (10) peut être fabriqué à partir d'un kit de montage (202) selon l'une quelconque des revendications 1 à 10.

12. Dispositif de pile à combustible (10) selon la revendication 11, **caractérisé en ce que** le dispositif de pile à combustible (10) comprend au moins un module (204) réalisé sous la forme d'un module d'alimentation en combustible (28), au moins un module réalisé sous la forme d'un module de refroidissement (34), au moins un module réalisé sous la forme d'un module de commande (32) servant à commander le dispositif de pile à combustible (10) et/ou au moins un module réalisé sous la forme d'un module de couplage (248) servant à coupler le dispositif de pile à combustible (10) à un dispositif de batterie (240), lesquels sont disposés respectivement dans un boîtier de module (200).

13. Véhicule (250), comprenant plusieurs dispositifs de batterie (240) et au moins un dispositif de pile à combustible (10) selon l'une quelconque des revendications 11 ou 12.

14. Véhicule (250) selon la revendication 13, **caractérisé en ce que** les boîtiers de module (200) pour les modules (204) du dispositif de pile à combustible (10) et des boîtiers pour les dispositifs de batterie (240) présentent sensiblement les mêmes dimensions.
